(19) Europäisches Patentamt
European Patent Office
Office européen des brevets

(11) EP 4 219 599 B1

(12) EUROPEAN PATENT SPECIFICATION

(45) Date of publication and mention of the grant of the patent:
**22.04.2026 Bulletin 2026/17**

(21) Application number: **22153793.9**

(22) Date of filing: **28.01.2022**

(51) International Patent Classification (IPC):
***C08J 3/00*** *(2006.01)* ***C08J 5/18*** *(2006.01)*
***C08L 23/08*** *(2025.01)*

(52) Cooperative Patent Classification (CPC):
(C-Sets available)
**C08J 5/18; C08F 210/16; C08L 23/0815;**
C08F 4/65912; C08F 4/65916; C08F 2420/07;
C08J 2323/08; C08J 2423/08; C08L 2205/035;
C08L 2207/066 (Cont.)

# (54) POLYETHYLENE BLEND FOR A FILM LAYER

POLYETHYLENMISCHUNG FÜR EINE FOLIENSCHICHT

MÉLANGE DE POLYÉTHYLÈNE POUR UNE COUCHE DE FILM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**02.08.2023 Bulletin 2023/31**

(73) Proprietor: **Borealis GmbH**
**1020 Vienna (AT)**

(72) Inventors:
- **WANG, Jingbo**
**4021 Linz (AT)**
- **BERGER, Friedrich**
**4021 Linz (AT)**
- **HOFF, Matthias**
**4021 Linz (AT)**
- **POLLHAMMER, Stefan**
**4021 Linz (AT)**
- **ALBRECHT, Andreas**
**4021 Linz (AT)**

(74) Representative: **TBK**
**Bavariaring 4-6**
**80336 München (DE)**

(56) References cited:
**EP-A1- 3 298 067**
**WO-A1-2021/191019**
**WO-A1-2022/018239**
**US-A1- 2020 056 004**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815, C08L 23/0815;**
C08F 210/16, C08F 210/08, C08F 2500/12,
C08F 2500/27;
C08F 210/16, C08F 210/14, C08F 210/08,
C08F 2500/12, C08F 2500/27, C08F 2500/26,
C08F 2500/39;
C08F 210/16, C08F 210/14, C08F 2500/12,
C08F 2500/07, C08F 2500/27;
C08L 2207/066, C08L 2207/066, C08L 2207/066

## Description

The present invention relates to a polyethylene blend of a specific multimodal metallocene catalysed linear low density polyethylene (mLLDPE) and a specific branched metallocene catalysed polyethylene copolymer (mPE), which provides films with well-balanced properties, especially dart drop (impact strength) and haze.

High standards are nowadays required for packaging materials. Quite often properties are required in the packaging industry, which are conflicting. Typically, high stiffness and toughness are required in parallel. To achieve these different properties seldom pure components, but rather combinations of different polymer components are used. Two different approaches mainly are at the skilled person's disposal: (a) blends of two or more polymers to form a heterophasic structure, or (b) producing a multilayer structure with different materials providing different functions. Both of them are applied in industry.

Due to the different requirements nowadays multilayer packaging with different type of materials are used, which from one side serve the needs, but from the other side such structures make recycling difficult. Therefore using pure materials is preferred, i.e. a packaging with 'mono-materials', i.e. only polyethylene based polymers, is really appreciated. However, this imposes higher requirement to the performance of materials themselves, a material with balanced performance is therefore highly appreciated.

mLLDPE attracts specific interests due to its excellence balance between cost and performance. The main drawback is that the processability and optics are rather poor. One common way is to blend the mLLDPE with LDPE, however, this is known to worsen other properties, like sealing and impact.

As stated above the recycling of packaging material after their first use is an important topic nowadays. It is much more challenging to recycle packaging films made of different materials, e.g. different plastics, than to recycle mono-material solutions. On the other hand, the use of different materials is sometimes necessary to obtain acceptable properties, like mechanical properties. Therefore, an objective of the present invention is the provision of a polyethylene based mono-material solution, which provides good optical properties and mechanical properties, especially dart drop (impact strength). In other words, a material is desirable that provides an advantageous combination of good optics and mechanical properties, especially haze and dart drop, to films prepared from such a material.

The present inventors have found that a blend of a specific multimodal metallocene catalysed linear low density polyethylene (mLLDPE) and a specific branched metallocene catalysed polyethylene copolymer (mPE), provides films with well-balanced properties, especially dart drop (impact strength) and haze.

Prior art documents are WO2022/018239A1, EP3298067A1, WO2021/191019A1 and US2020/056004A1

## Summary of Invention

The present invention is therefore directed to a polyethylene blend comprising

a) 51.0 wt% to 99.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),

whereby the ethylene-1-butene polymer component (A) has

a density in the range of 920 to 950 kg/$m^3$,
a $MFR_2$ (190°C, 2.16 kg, ISO 1133) in the range of 2.0 to 400.0 g/10 min, and

the ethylene polymer component (B) has

a density in the range of 885 to 918 kg/$m^3$,
a $MFR_2$ (190°C, 2.16 kg, ISO 1133) in the range of 0.01 to 1.5 g/10 min,

whereby the multimodal metallocene catalysed linear low density polyethylene (mLLDPE) has a density in the range of 905 to 940 kg/$m^3$,

a $MFR_2$ (190°C, 2.16 kg, ISO 1133) in the range of 0.3 to 5.0 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of from 20 to 70;
a branching index $g'_{85-100}$ (determined by gel permeation chromatography (GPC) as described in the

experimental part) of < 1.00 and

b) 1.0 to 49.0 wt%, based on the total weight of the polyethylene blend, of a branched metallocene catalysed polyethylene copolymer (mPE), whereby said mPE has

a density in the range of 905 to 940 kg/m$^3$;
a $MFR_2$ (190°C, 2.16 kg, ISO 1133) in the range of 0.01 to 5.0 g/10 min, and
a branching index $g'_{85-100}$ (determined by gel permeation chromatography (GPC) as described in the experimental part) in the range of 0.50 to < 0.90,

whereby the ratio of the $MFR_2$ of the mPE to the $MFR_2$ of the mLLDPE is < 1.0 and
the branching index $g'_{85-100}$ of the mPE is lower than the branching index $g'_{85-100}$ of the mLLPDE.

In an embodiment of the present invention, the ethylene-1-butene polymer component (A) of the multimodal metallocene catalysed linear low density polyethylene (mLLDPE) consists of an ethylene polymer fraction (A-1) and an ethylene polymer fraction (A-2).

Unexpectedly the above defined blend of the invention provides good dart drop strength and low haze to films comprising such blends.

The invention is therefore further direct to films comprising the above defined polyethylene blend.

**Definitions**

Where the term "comprising" is used in the present description and claims, it does not exclude other non-specified elements of major or minor functional importance. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Whenever the terms "including" or "having" are used, these terms are meant to be equivalent to "comprising" as defined above.

Where an indefinite or definite article is used when referring to a singular noun, e.g. "a", "an" or "the", this includes a plural of that noun unless something else is specifically stated.

Metallocene catalysed linear low density polyethylene (mLLDPE) is defined in this invention as linear low density polyethylene copolymer, which has been produced in the presence of a metallocene catalyst.

For the purpose of the present invention "metallocene catalysed linear low density polyethylene (mLLDPE) which consists of an ethylene-1-butene polymer component (A) and an ethylene-1-hexene polymer component (B)" means that the mLLDPE is produced in an at least 2-stage sequential polymerization process, wherein first component (A) is produced and component (B) is then produced in the presence of component (A) in a subsequent polymerization step, yielding the mLLDPE or vice versa, i.e. first component (B) is produced and component (A) is then produced in the presence of component (B) in a subsequent polymerization step, yielding the mLLDPE .

Metallocene catalysed polyethylene copolymer (mPE) is defined in this invention as polyethylene copolymer, which has been produced in the presence of a metallocene catalyst, which is different from the metallocene complex used for producing the mLLDPE.

Term "multimodal" in context of multimodal metallocene catalysed linear low density polyethylene means herein multimodality with respect to melt flow rate (MFR) ) of at least the ethylene polymer components (A) and (B), i.e. the ethylene polymer components (A) and (B), have different MFR values. The multimodal metallocene catalysed linear low density polyethylene can have further multimodality between the ethylene polymer components (A) and (B) with respect to one or more further properties, like density, comonomer type and/or comonomer content, as will be described later below.

**Detailed description of Invention**

The polyethylene blend according to the present invention comprises, preferably consists of a) a multimodal metallocene catalysed linear low density polyethylene (mLLDPE) and b) a metallocene catalysed polyethylene copolymer (mPE).

Thus the blend comprises

a) 51.0 wt% to 99.0 wt%, preferably 65.0 wt% to 98.0 wt%, more preferably 75.0 wt% to 96.0 wt% and even more preferably 80.0 wt% to 92.0 wt%, based on the total weight of the polyethylene blend, of the multimodal metallocene catalysed linear low density polyethylene (mLLDPE) and

b) 1.0 to 49.0 wt%, preferably 2.0 wt% to 35.0 wt%, more preferably 4.0 wt% to 25.0 wt% and even more preferably 8.0 wt% to 20.0 wt%, based on the total weight of the polyethylene blend, of the metallocene catalysed polyethylene copolymer (mPE) .

In an embodiment the blend consists of a) and b) only, thus the total amounts of a) + b) summing up to 100 wt%.

*Ad multimodal metallocene catalysed linear low density polyethylene (mLLDPE)*

The multimodal metallocene catalysed linear low density polyethylene (mLLDPE) is referred herein as "multimodal", since the ethylene-1-butene polymer component (A), optionally including ethylene polymer fractions (A-1) and (A-2), and ethylene-1-hexene polymer component (B) have been produced under different polymerization conditions resulting in different Melt Flow Rates (MFR, e.g. $MFR_2$). I.e. the multimodal PE is multimodal at least with respect to difference in MFR of the ethylene polymer components (A) and (B).

The multimodal metallocene catalysed linear low density polyethylene (mLLDPE) consists of

(i) 30.0 to 70.0 wt% of an ethylene-1-butene polymer component (A), and
(ii) 70.0 to 30.0 wt% of an ethylene-1-hexene polymer component (B).

The amount of (A) and (B) add up to 100.0 wt%.

In an embodiment of the present invention, the ethylene-1-butene polymer component (A) consists of an ethylene polymer fraction (A-1) and (A-2).

It is possible that fraction (A-1) is produced first and then fraction (A-2) is produced in the presence of fraction (A-1) in a subsequent reactor or vice versa, i.e. fraction (A-2) is produced first and then fraction (A-1) is produced in the presence of fraction (A-2) in a subsequent reactor. Preferably fraction (A-1) is produced first.

In case that the ethylene-1-butene polymer component (A) consists of ethylene polymer fractions (A-1) and (A-2), the $MFR_2$ of the ethylene polymer fractions (A-1) and (A-2) may be different from each other or may be the same.

The ethylene polymer fraction (A-1) has a $MFR_2$ (190°C, 2.16 kg, ISO 1133) in the range of 1.0 to 800.0 g/10 min, preferably of 1.5 to 400.0 g/10 min, more preferably of 2.0 to 200.0 g/10 min and even more preferably of 2.5 to 50.0 g/10 min, like 3.0 to 20.0 g/10 min.

The ethylene polymer fraction (A-2) has a $MFR_2$ (190°C, 2.16 kg, ISO 1133) in the range of 1.5 to 400.0 g/10 min, preferably of 2.0 to 200.0 g/10 min, more preferably of 2.5 to 40.0 g/10 min and most preferably of 3.0 to 10.0 g/10 min.

The $MFR_2$ of the ethylene polymer components (A) and (B) are different from each other.

The ethylene polymer component (A) has a $MFR_2$ (190°C, 2.16 kg, ISO 1133) in the range of 2.0 to 400 g/10 min, preferably of 2.5 to 300 g/10 min, more preferably of 3.0 to 200 g/10 min, even more preferably of 3.2 to 100 g/10 min and still more preferably of 3.5 to 20.0 g/10 min, like 3.8 to 10.0 g/10 min.

The ethylene polymer component (B) has a $MFR_2$ (190°C, 2.16 kg, ISO 1133) in the range of 0.01 to 1.5 g/10 min, preferably of 0.05 to 1.5 g/10 min, more preferably of 0.1 to 1.2 g/10 min and even more preferably of 0.2 to 1.0 g/10 min.

The $MFR_2$ (190°C, 2.16 kg, ISO 1133) of the multimodal metallocene catalysed linear low density polyethylene (mLLDPE) is in the range of 0.3 to 5.0 g/10 min, preferably 0.8 to 4.0 g/10 min, more preferably 1.0 to 2.5 g/10 min.

The multimodal metallocene catalysed linear low density polyethylene (mLLDPE) has a ratio of the $MFR_{21}$ (190°C, 21.6 kg, ISO 1133) to $MFR_2$ (190°C, 2.16 kg, ISO 1133), $MFR_{21}/MFR_2$, in the range of 20 to 70, preferably 22 to 50, more preferably 24 to 35.

In an embodiment of the invention it is preferred the ratio of the $MFR_2$ (190°C, 2.16 kg, ISO 1133) of ethylene-1-butene polymer component (A) to the $MFR_2$ (190°C, 2.16 kg, ISO 1133) of the final multimodal metallocene catalysed linear low density polyethylene (mLLDPE) is at least 2.0 to 20.0, preferably 2.5 to 15.0 and more preferably of 3.0 to 10.0.

Naturally, in addition to multimodality with respect to, i.e. difference between, the $MFR_2$ of ethylene polymer components (A) and (B), the multimodal PE of the invention can also be multimodal e.g. with respect to the density of the ethylene polymer components (A) and (B).

Preferably, the multimodal metallocene catalysed linear low density polyethylene (mLLDPE) is further multimodal with respect to the comonomer content of the ethylene polymer components (A) and (B).

The comonomer type for the polymer fractions (A-1) and (A-2) is the same, thus both fractions therefore have 1-butene as comonomer.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (wt%) in component B = (comonomer content (wt%) in final product - (weight fraction of component A * comonomer content (wt%) in component A)) / (weight fraction of component B)

The total amount of 1-butene, based on the multimodal metallocene catalysed linear low density polyethylene (mLLDPE) is preferably in the range of 0.1 to 3.0 wt%, preferably 0.5 to 2.5 wt% and more preferably 0.8 to 2.0 wt%.

The total amount of 1-hexene, based on the multimodal metallocene catalysed linear low density polyethylene (mLLDPE) preferably is in the range of 2.0 to 20.0 wt%, preferably 4.0 to 18.0 wt% and more preferably 6.0 to 15.0 wt%.

The total amount (wt%) of 1-butene, present in the ethylene-1-butene polymer component (A) is of 0.5 to 8.0 wt%, preferably of 0.8 to 6.0 wt%, more preferably of 1.0 to 5.0 wt%, even more preferably of 1.5 to 4.5 wt%, based on the ethylene-1-butene polymer component (A).

The total amount (wt%) of 1-hexene, present in the ethylene-1-hexene polymer component (B) is of 8.0 to 25.0 wt%, preferably of 9.0 to 20.0 wt%, more preferably of 10.0 to 18.0 wt%, based on the ethylene-1-hexene polymer component (B).

**Even more** preferably the multimodal metallocene catalysed linear low density polyethylene (mLLDPE) of the invention is further multimodal with respect to difference in density between the ethylene polymer component (A) and ethylene polymer component (B). Preferably, the density of ethylene polymer component (A) is different, preferably higher, than the density of the ethylene polymer component (B).

The density of the ethylene polymer component (A) is in the range of 920 to 950 $kg/m^3$, preferably of 922 to 945 $kg/m^3$, more preferably 925 to 940 $kg/m^3$ and/or the density of the ethylene polymer component (B) is of in the range of 885 to 918 $kg/m^3$, preferably of 890 to 915 $kg/m^3$ and more preferably of 900 to 912 $kg/m^3$.

The polymer fraction (A-1) has a density in the range of 920 to 950 $kg/m^3$, preferably of 922 to 945 $kg/m^3$, more preferably of 925 to 940 $kg/m^3$, like 928 to 935 $kg/m^3$.

The density of the polymer fraction (A-2) is in the range of 920 to 950 $kg/m^3$, preferably of 925 to 945 $kg/m^3$.

The density of the multimodal metallocene catalysed linear low density polyethylene (mLLDPE) is in the range of 905 to 940 $kg/m^3$, preferably of 908.0 to 930 $kg/m^3$ and more preferably of 910.0 to 925.0 $kg/m^3$.

More preferably the multimodal metallocene catalysed linear low density polyethylene (mLLDPE) is multimodal at least with respect to, i.e. has a difference between, the $MFR_2$, the comonomer content as well as with respect to, i.e. has a difference between the density of the ethylene polymer components, (A) and (B), as defined above, below or in the claims including any of the preferable ranges or embodiments of the polymer composition.

The multimodal metallocene catalysed linear low density polyethylene (mLLDPE) furthermore has a branching index $g'_{85-100}$ of below < 1.00, preferably up to 0.98 and more preferably up to 0.96.

The branching index $g'_{85-100}$ is preferably at least 0.70, more preferably at least 0.80 and even more preferably at least 0.85.

Thus, preferred ranges are 0.70 to < 1.00, preferably 0.80 to 0.98 and more preferably 0.85 to 0.96.

The branching index $g'_{85-100}$ correlates with the amount of branches of a polymer in the high molecular weight fraction, to be more precise in the fraction which represents 15 wt% of the polymers with the highest molecular weight of the mLLDPEs. The branching index $g'_{85-100}$ is defined in the following way: $g'_{85-100} = \frac{\sum_{i=85}^{100} a_i \times g'_i}{\sum_{i=85}^{100} a_i}$ where g' is defined as the ratio of the intrinsic viscosity of the branched polymer $[IV]_{br}$ over is the intrinsic viscosity of the linear polymer $[IV]_{lin}$ at the same molecular weight ($g' = [IV]_{Br}/[IV]_{lin}$ and $a_i$ is the corresponded area of the concentration detector which is proportional to the weight fraction. Thereby, a low g'-value is an indicator for a high branched polymer. In other words, if the g'-value decreases, the branching content of the polymer increases.

The branching index is determined via GPC-VISC-LS.

It is within the scope of the invention, that the first and the second ethylene polymer fraction (A-1 and A-2) of the ethylene polymer component (A) are present in a weight ratio of 4:1 up to 1:4, such as 3:1 to 1:3, or 2:1 to 1:2, or 1:1.

The ethylene polymer component (A) is present in an amount of 30.0 to 70.0 wt% based on the multimodal metallocene catalysed linear low density polyethylene (mLLDPE), preferably in an amount of 32.0 to 55.0 wt% and even more preferably in an amount of 34.0 to 45.0 wt%. Thus, the ethylene polymer component (B) is present in an amount of 70.0 to 30.0 wt% based on the multimodal metallocene catalysed linear low density polyethylene (mLLDPE), preferably in an amount of 68.0 to 45.0 wt% and more preferably in an amount of 66.0 to 55.0 wt%.

The multimodal metallocene catalysed linear low density polyethylene (mLLDPE), can be produced in a 2-stage process, preferably comprising a slurry reactor (loop reactor ), whereby the slurry (loop) reactor is connected in series to a gas phase reactor (GPR), whereby either ethylene component (A) or ethylene component (B) is produced in the loop reactor and the other ethylene polymer component is then produced in GPR in the presence of the first produced ethylene polymer component to produce the multimodal metallocene catalysed linear low density polyethylene (mLLDPE), preferably the ethylene polymer component (A) is produced in the loop reactor and the ethylene polymer component (B) is produced in GPR in the presence of the ethylene polymer component (A) to produce the multimodal metallocene

catalysed linear low density polyethylene (mLLDPE).

In case that the ethylene component (A) of the multimodal metallocene catalysed linear low density polyethylene (mLLDPE) consists of ethylene polymer fractions (A-1) and (A-2), the multimodal metallocene catalysed linear low density polyethylene (mLLDPE) can be produced with a 3-stage process, preferably comprising a first slurry reactor (loop reactor 1), whereby the first slurry loop reactor is connected in series with another slurry reactor (loop reactor 2), so that the first ethylene polymer fraction (A-1) produced in the loop reactor 1 is fed to the loop reactor 2, wherein the second ethylene polymer fraction (A-2) is produced in the presence of the first fraction (A-1). The loop reactor 2 is thereby connected in series to a gas phase reactor (GPR), so that the first ethylene polymer component (A) leaving the second slurry reactor is fed to the GPR to produce a trimodal polyethylene copolymer. In this case, the reaction conditions in the two slurry reactors are chosen in a way that in the two slurry reactors different products in view of MFR and/or density are produced.

Such a process is described inter alia in WO 2016/198273, WO 2021009189, WO 2021009190, WO 2021009191 and WO 2021009192. Full details of how to prepare suitable multimodal metallocene catalysed linear low density polyethylene (mLLDPE) can be found in these references.

A suitable process is the Borstar PE process or the Borstar PE 3G process.

The multimodal metallocene catalysed linear low density polyethylene (mLLDPE) according to the present invention is therefore preferably produced in a loop loop gas cascade. Such polymerization steps may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step is preferably conducted in slurry and the amount of polymer produced in an optional prepolymerization step is counted to the amount (wt%) of ethylene polymer component (A).

The catalyst components are preferably all introduced to the prepolymerization step when a prepolymerization step is present. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is understood within the scope of the invention, that the amount or polymer produced in the prepolymerization lies within 1 to 5 wt% in respect to the final metallocene catalysed multimodal metallocene catalysed linear low density polyethylene (mLLDPE). This can counted as part of the first ethylene polymer component (A).

*Catalyst*

The multimodal metallocene catalysed linear low density polyethylene (mLLDPE) used in the process of the invention is one made using a metallocene catalyst. A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

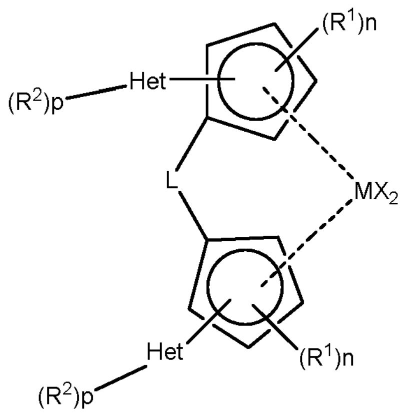

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or $-Si(R)_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

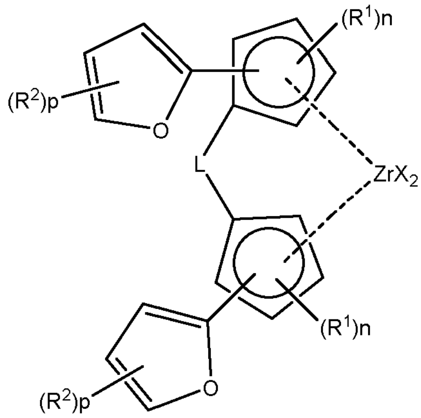

(I´)

wherein each X is independently a halogen atom, a $C_{1-6}$-alkyl, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a $-Si(R)_3$ alkyl group; each p is 1;
each R is $C_{1-6}$-alkyl or phenyl group.

Highly preferred complexes of formula (I) are

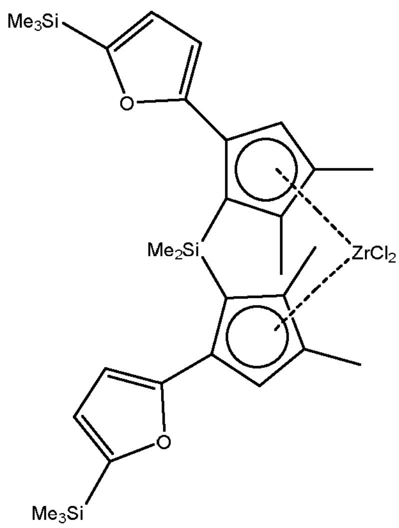

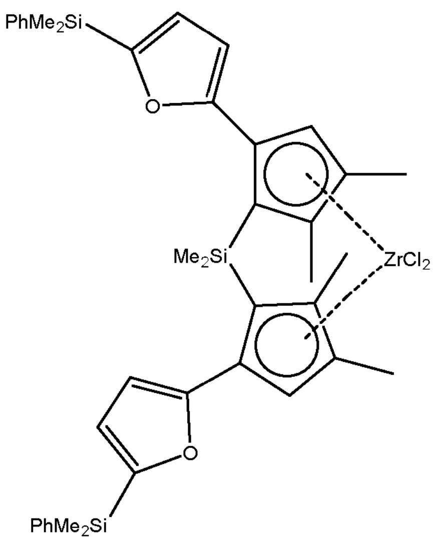

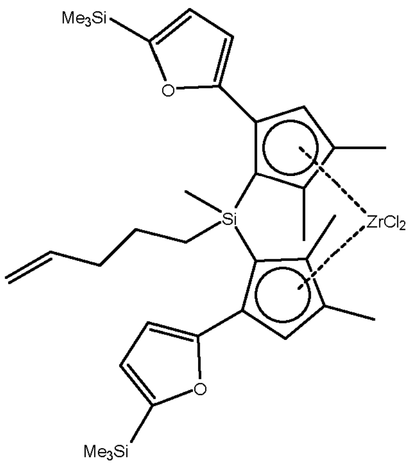

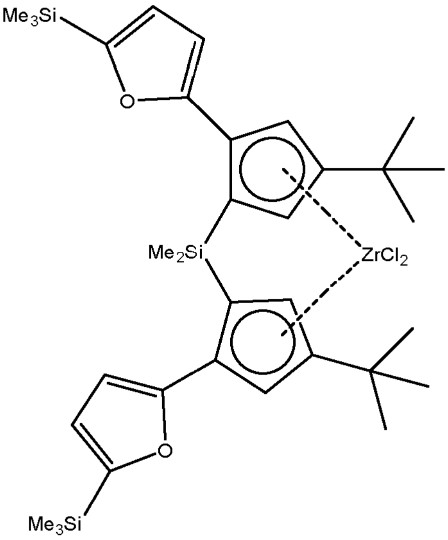

Most preferably the complex dimethylsilanediylbis[2-(5-trimethylsilylfuran-2-yl)-4,5-dimethylcyclopentadien-1-yl] zirconium dichloride is used.

More preferably the ethylene polymer components (A) and (B) of the multimodal metallocene catalysed linear low density polyethylene (mLLDPE) are produced using, i.e. in the presence of, the same metallocene catalyst.

To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred. Polyethylene copolymers made using single site catalysis, as opposed to Ziegler Natta catalysis, have characteristic features that allow them to be distinguished from Ziegler Natta materials. In particular, the comonomer distribution is more homogeneous. This can be shown using TREF or Crystaf techniques. Catalyst residues may also indicate the catalyst used. Ziegler Natta catalysts would not contain a Zr or Hf group (IV) metal for example.

The multimodal metallocene catalysed linear low density polyethylene (mLLDPE) may contain further polymer components and optionally additives and/or fillers. In case the multimodal metallocene catalysed linear low density polyethylene (mLLDPE) contains further polymer components, then the amount of the further polymer component(s) typically varies between 3.0 to 20.0 wt% based on the combined amount of the multimodal metallocene catalysed linear low density polyethylene (mLLDPE) and the other polymer component(s).

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA).

It is understood herein that any of the additives and/or fillers can optionally be added in so-called master batch, which comprises the respective additive(s) together with a carrier polymer. In such case the carrier polymer is not calculated to the polymer components of the multimodal metallocene catalysed linear low density polyethylene (mLLDPE), but to the amount of the respective additive(s), based on the total amount of the multimodal metallocene catalysed linear low density polyethylene (mLLDPE) (100 wt%).

*Ad branched metallocene catalysed polyethylene copolymer (mPE)*

The polyethylene blend according to the present invention comprises as component b) a branched metallocene catalysed polyethylene copolymer (mPE); whereby said mPE has a density determined according to ISO 1183 in the range of 905 to 940 kg/m$^3$; and a $MFR_2$ (190°C, 2.16 kg, ISO 1133) in the range of 0.01 to 5.0 g/10 min and a branching index $g'_{85-100}$ (determined by gel permeation chromatography (GPC) as described in the experimental part) in the range of 0.50 to < 0.90.

The $MFR_2$ (190°C, 2.16 kg, ISO 1133) is preferably in the range of 0.05 to 3.0 g/10 min, more preferably in the range of 0.1 to 1.5 g/10 min, even more preferably in the range of 0.1 to 1.0 g/10min.

The density determined according to ISO 1183 of the mPE is preferably in the range of 908 to 930 kg/m$^3$, more preferably in the range of 910 to 925 kg/m$^3$ and even more preferably in the range of 912 to 920 kg/m$^3$.

The branching index $g'_{85-100}$ (determined by gel permeation chromatography (GPC) as described in the experimental part)of the mPE is preferably in the range of 0.60 to 0.88, more preferably of 0.70 to 0.86 and even more preferably of 0.75 to 0.85.

In addition the branched metallocene catalysed polyethylene copolymer (mPE) furthermore has a branching index $g'_{90-100}$ in the range of 0.50 to 0.95, preferably 0.60 to 0.90 and more preferably 0.65 to 0.85.

According to the present invention the branching index, i.e. $g'_{85-100}$ of the mPE is lower than the corresponding branching index of the mLLDPE.

The branched metallocene catalysed polyethylene copolymer (mPE) is preferably a bimodal polyethylene copolymer consisting of

30.0 to 70.0 wt%, based on the mPE, of an ethylene-1-butene polymer component (X), and
70.0 to 30.0 wt%, based on the mPE, of an ethylene-1-hexene polymer component (Y).

The $MFR_2$ of the ethylene polymer components (X) and (Y) are different from each other.

The ethylene polymer component (X) has a $MFR_2$ (190°C, 2.16 kg, ISO 1133) in the range of 1.0 to 40 g/10 min, preferably of 2.0 to 30 g/10 min, more preferably of 3.0 to 20 g/10 min, even more preferably of 4.0 to 10 g/10 min.

The ethylene polymer component (Y) has a $MFR_2$ (190°C, 2.16 kg, ISO 1133) in the range of 0.01 to 1.5 g/10 min, preferably of 0.02 to 1.0 g/10 min, more preferably of 0.03 to 0.8 g/10 min and even more preferably of 0.03 to 0.5 g/10 min.

The comonomer content of component (X) and (Y) can be measured, or, in case, and preferably, one of the components is produced first and the other thereafter in the presence of the first produced in so called multistage process, then the comonomer content of the first produced component, e.g. component (X), can be measured and the comonomer content of the other component, e.g. component (Y), can be calculated according to following formula:

Comonomer content (wt%) in component Y = (comonomer content (wt%) in final product - (weight fraction of component X * comonomer content (wt%) in component X)) / (weight fraction of component Y)

The total amount of 1-butene, based on the branched metallocene catalysed polyethylene copolymer (mPE) is preferably in the range of 0.1 to 3.0 wt%, preferably 0.5 to 2.5 wt% and more preferably 0.8 to 2.0 wt%.

The total amount of 1-hexene, based on the branched metallocene catalysed polyethylene copolymer (mPE) preferably is in the range of 2.0 to 20.0 wt%, preferably 4.0 to 18.0 wt% and more preferably 6.0 to 15.0 wt%.

The total amount (wt%) of 1-butene, present in the ethylene-1-butene polymer component (X) is in the range of 0.5 to 8.0 wt%, preferably of 0.8 to 6.0 wt%, more preferably of 1.0 to 5.0 wt%, even more preferably of 1.5 to 4.0 wt%, based on the ethylene-1-butene polymer component (A).

The total amount (wt%) of 1-hexene, present in the ethylene-1-hexene polymer component (Y) is in the range of 8.0 to 25.0 wt%, preferably of 9.0 to 20.0 wt%, more preferably of 10.0 to 18.0 wt%, based on the ethylene-1-hexene polymer component (B).

In addition, the branched metallocene catalysed polyethylene copolymer (mPE) preferably is further multimodal with respect to difference in density between the ethylene polymer component (X) and ethylene polymer component (Y). Preferably, the density of ethylene polymer component (X) is different, preferably higher, than the density of the ethylene polymer component (Y).

The density of the ethylene polymer component (X) is in the range of 920 to 950 $kg/m^3$, preferably of 925 to 945 $kg/m^3$, more preferably 930 to 940 $kg/m^3$ and/or the density of the ethylene polymer component (Y) is of in the range of 885 to 910 $kg/m^3$, preferably of 890 to 908 $kg/m^3$ and more preferably of 892 to 905 $kg/m^3$.

The mPE is produced in the presence of a metallocene catalyst, whereby the metallocene catalyst is different from the metallocene catalyst used to prepare the mLLDPE.

Preferably, the metallocene catalyst used for producing the mPE includes a metallocene complex of formula (II)

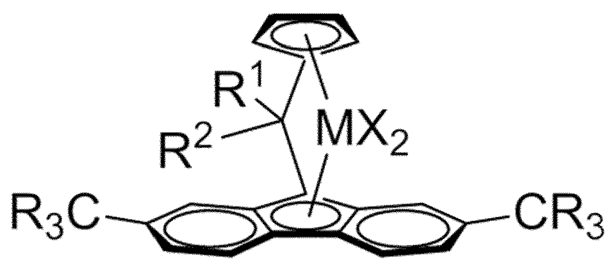

(II)

wherein
M is Zr.

In the formula (II) each X, which may be the same or different, is a sigma ligand, preferably a hydrogen atom, a halogen atom, a $R^3$, $OR^3$, $OSO_2CF_3$, $OCOR^3$, $SR^3$, $NR^3_2$ or $PR^3_2$ group wherein $R^3$ is a linear or branched, cyclic or acyclic, $C_1$-$C_{20}$-alkyl, $C_2$-$C_{20}$-alkenyl, $C_2$-$C_{20}$-alkynyl, $C_6$-$C_{20}$-aryl, $C_7$-$C_{20}$-alkylaryl or $C_7$-$C_{20}$-arylalkyl radical; optionally containing heteroatoms belonging to groups 14-16 or is $SiR^3_3$, $SiHR^3_2$ or $SiH_2R^3$. $R^3$ is preferably $C_{1-6}$-alkyl, phenyl or

benzyl group.

The term halogen includes fluoro, chloro, bromo and iodo groups, preferably chloro groups.

More preferably each X is independently a halogen atom or a $R^3$ or $OR^3$ group, whereby $R^3$ is a $C_{1-6}$-alkyl, phenyl or benzyl group.

Most preferably X is methyl, benzyl or chlorine group. Preferably both X groups are the same.

R are the same or different from each other and can be saturated linear or branched $C_1$-$C_{10}$ alkyl, $C_5$-$C_{10}$ aryl, $C_6$-$C_{20}$ alkylaryl or $C_6$-$C_{20}$ arylalkyl groups, which can optionally contain up to 2 heteroatoms or silicon atoms.

Preferably R are the same or different from each other and can be saturated linear or branched $C_1$-$C_6$ alkyl, $C_6$-$C_{10}$ aryl, $C_6$-$C_{20}$ alkylaryl or $C_6$-$C_{20}$ arylalkyl groups, which do not contain heteroatoms or silicon atoms.

More preferably all R are the same and are saturated linear or branched $C_1$-$C_6$ alkyl or $C_6$-$C_{10}$ aryl, and even more preferred all R are the same and are a saturated linear or branched $C_1$-$C_6$ alkyl.

Most preferably all R are the same and are all $C_1$ alkyl groups.

$R^1$ is a $C_6$-$C_{10}$ aryl or $C_6$-$C_{20}$ alkylaryl group optionally containing up to 2 heteroatoms or silicon atoms or a $C_4$-$C_{10}$ heteroaryl group. $C_6$-$C_{20}$ alkylaryl group is meant to be an $C_6$-$C_{10}$ aryl group which is substituted by one or more alkyl groups which may be the same or different, whereby the number of C-atoms in the alkyl group substituents is in a range which leads to $C_6$-$C_{20}$ alkylaryl groups.

Non limiting examples for $R^1$ are phenyl, para-tolyl, para-iso-propylphenyl, 3,5-dimethylphenyl, beta-naphthyl, 4-(N,N-dimethylamino)phenyl, 4-pyridyl, beta-thiophenyl, 4-methyl-thiophenyl etc..

Preferably $R^1$ is a $C_6$-$C_{10}$ aryl or $C_6$-$C_{12}$ alkylaryl group, which do not contain heteroatoms or silicon atoms or a $C_4$-$C_8$ heteroaryl group.

More preferably $R^1$ is unsubstituted phenyl (i.e. $C_6$ aryl), or phenyl substituted by one to two $C_1$-$C_6$ alkyl groups(i.e. $C_7$-$C_{18}$ alkylaryl group).

Even more preferably $R^1$ is phenyl, para-tolyl or para-iso-propylphenyl. Most preferably $R^1$ is phenyl or para-iso-propylphenyl

$R^2$ is a $C_4$-$C_{20}$ cycloalkyl group, optionally carrying alkyl substituents in beta-positions, of formula (III)

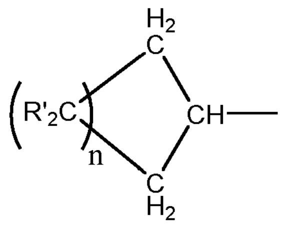

(III)

in which R' can be the same or can be different from each other and can be hydrogen or is defined as R and n is 1 to 17.

Preferably $R^2$ is a $C_4$-$C_{10}$ cycloalkyl group of formula (II), wherein n is 1 to 7 and R' can be the same or can be different from each other and can be hydrogen or saturated linear or branched $C_1$-$C_6$ alkyl or $C_6$-$C_{10}$ aryl.

More preferably $R^2$ is a $C_4$-$C_{10}$ cycloalkyl group of formula (II), wherein n is 1 to 7 and R' can be the same or can be different from each other and can be hydrogen or saturated linear or branched $C_1$-$C_4$ alkyl group.

Non-limiting examples for $R^2$ are cyclobutyl, 3,3-dimethylcyclobutyl, cyclopentyl, cyclohexyl, 3,3,5,5-tetramethylcyclohexyl and the like.

Most preferably $R^2$ is a $C_4$-$C_8$ cycloalkyl group of formula (II), wherein n is 1 to 5 and all R' are hydrogen.

Non-limiting examples of complexes of formula (II) are

1. (Phenyl)(cyclohexyl)methylene(cyclopentadienyl)(2,7-di-tert-butylfluoren-9-yl)zirconium dichloride
2. (Phenyl)(cyclohexyl)methylene(cyclopentadienyl)(2,7-di-tert-butylfluoren-9-yl)zirconium dimethyl
3. (Phenyl)(cyclohexyl)methylene(cyclopentadienyl)(2,7-di-tert-butylfluoren-9-yl)zirconium dibenzyl
4. (Phenyl)(cyclopentyl)methylene(cyclopentadienyl)(2,7-di-tert-butylfluoren-9-yl)zirconium dichloride
5. (Phenyl)(cyclopentyl)methylene(cyclopentadienyl)(2,7-di-tert-butylfluoren-9-yl)zirconium dimethyl
6. (Phenyl)(cyclopentyl)methylene(cyclopentadienyl)(2,7-di-tert-butylfluoren-9-yl)zirconium dibenzyl
7. (Phenyl)(cyclobutyl)methylene(cyclopentadienyl)(2,7-di-tert-butylfluoren-9-yl)zirconium dichloride
8. (Phenyl)(cyclobutyl)methylene(cyclopentadienyl)(2,7-di-tert-butylfluoren-9-yl)zirconium dimethyl
9. (4-isopropylphenyl)(cyclohexyl)methylene(cyclopentadienyl)(2,7-di-tert-butylfluoren-9-yl) zirconium dichloride
10. (4-isopropylphenyl)(cyclohexyl)methylene(cyclopentadienyl)(2,7-di-tert-butylfluoren-9-yl) zirconium dimethyl

11. (4-isopropylphenyl)(cyclopentyl)methylene(cyclopentadienyl)(2,7-di-tert-butylfluoren-9-yl) zirconium dichloride
12. (4-isopropylphenyl)(cyclopentyl)methylene(cyclopentadienyl)(2,7-di-tert-butylfluoren-9-yl) zirconium dimethyl
13. (4-isopropylphenyl)(cyclobutyl)methylene(cyclopentadienyl)(2,7-di-tert-butylfluoren-9-yl) zirconium dichloride
14. (4-isopropylphenyl)(cyclobutyl)methylene(cyclopentadienyl)(2,7-di-tert-butylfluoren-9-yl) zirconium dimethyl
15. (3,5-di-isopropylphenyl)(cyclohexyl)methylene(cyclopentadienyl)(2,7-di-tert-butylfluoren-9-yl) zirconium dichloride
16. (3,5-di-isopropylphenyl)(cyclohexyl)methylene(cyclopentadienyl)(2,7-di-tert-butylfluoren-9-yl) zirconium dimethyl
17. (3,5-di-isopropylphenyl)(cyclopentyl)methylene(cyclopentadienyl)(2,7-di-tert-butylfluoren-9-yl) zirconium dichloride
18. (3,5-di-isopropylphenyl)(cyclopentyl)methylene(cyclopentadienyl)(2,7-di-tert-butylfluoren-9-yl) zirconium dimethyl
19. (3,5-di-isopropylphenyl)(cyclobutyl)methylene(cyclopentadienyl)(2,7-di-tert-butylfluoren-9-yl) zirconium dichloride
20. (3,5-di-isopropylphenyl)(cyclobutyl)methylene(cyclopentadienyl)(2,7-di-tert-butylfluoren-9-yl) zirconium dimethyl

More preferred are the complexes above having dichloride as X substituents.

To form the catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.

The branched metallocene catalysed polyethylene copolymer (mPE) can be produced in a 2-stage process, preferably comprising a slurry reactor (loop reactor), whereby the slurry (loop) reactor is connected in series to a gas phase reactor (GPR), whereby the ethylene polymer component (X) is produced in the loop reactor and the ethylene polymer component (Y) is produced in GPR in the presence of the ethylene polymer component (X) to produce the branched metallocene catalysed polyethylene copolymer (mPE).

*Polyethylene blend*

In the polyethylene blend according to the present invention the ratio of the $MFR_2$ of the mPE to the $MFR_2$ of the mLLDPE is < 1.0.

Preferably the ratio is in the range of 0.05 up to 0.8, more preferably 0.06 to 0.5, yet more preferably 0.08 to 0.4 and even more preferably 0.1 to 0.3.

As mentioned above, the polyethylene blend according to the present invention provides an excellent combination of good dart drop strength and low haze.

The invention is therefore further direct to films comprising the above defined polyethylene blend.

**Film**

The film of the invention comprises at least one layer comprising the polyethylene blend as described above. The film can be a monolayer film comprising the polyethylene blend as described above or a multilayer film, wherein at least one layer comprises the polyethylene blend according to the present invention. The terms "monolayer film" and multilayer film" have well known meanings in the art.

The films are preferably produced by any conventional film extrusion procedure known in the art including cast film and blown film extrusion. Most preferably, the film is a blown or cast film, especially a blown film. E.g. the blown film is produced by extrusion through an annular die and blowing into a tubular film by forming a bubble which is collapsed between nip rollers after solidification. This film can then be slit, cut or converted (e.g. gusseted) as desired. Conventional film production techniques may be used in this regard. If the preferable blown or cast film is a multilayer film then the various layers are typically coextruded. The skilled man will be aware of suitable extrusion conditions.

Films according to the present invention may be subjected to post-treatment processes, e.g. surface modifications, lamination or orientation processes or the like. Such orientation processes can be mono-axially (MDO) or bi-axially orientation, wherein mono-axial orientation is preferred.

In another preferred embodiment, the films are unoriented.

Preferred films according to the invention are monolayer blown films.

The monolayer film of the invention may have a thickness of 20 to 120 μm, preferably 30 to 100 μm and more preferably 35 to 80 μm. Films of the invention are preferably not stretched in the machine or transverse or biaxial direction.

The films of the invention are characterized by a dart-drop impact strength (DDI) determined according to ASTM D1709, method A on a 40 μm monolayer test blown film of at least 750 g up to 1500 g , preferably 800 g up to 1400 g and

more preferably 850 g up to 1200 g, like 900 to 1100 g.

Films according to the present invention furthermore have good optics, i.e. haze (measured on a 40 μm monolayer test blown film according to ASTM D 1003-00) of below 10%.

Thus, the films comprising the polyethylene blend as described above furthermore have a haze (measured on a 40 μm monolayer test blown film according to ASTM D 1003-00) of below 10 %, preferably between 2 % and 9 %, more preferably between 4 % and 8 %.

In one further embodiment of the present invention, the films have in addition high clarity (measured on a 40 μm monolayer test blown film according to ASTM D 1003-00) of above 98.0%, preferably of at least 98.5%, more preferably at least 99.0%.

Thus, in a preferred embodiment, the films comprising the polyethylene blend as described above, are characterized by having at least

a) a dart-drop impact strength (DDI) determined according to ASTM D1709, method A on a 40 μm monolayer test blown film of at least 750 g up to 1500 g , preferably 800 g up to 1400 g and more preferably 850 g up to 1200 g, and
b) a haze (measured on a 40 μm monolayer test blown film according to ASTM D 1003-00) of below 10 %, preferably between 2 % and 9 %, more preferably between 4 % and 8 % and
c) a clarity (measured on a 40 μm monolayer test blown film according to ASTM D 1003-00) of above 98.0%, preferably of at least 98.5%, more preferably at least 99.0%.

The inventive films are fully recyclable and thus improves sustainability, as it is in the most preferred embodiment a "100% PE" solution with no other polymer than ethylene based polymers being present.

In another embodiment the inventive film contains at least 90 wt% of PE polymers, more preferably 95 to 99 wt% of PE polymers (difference to 100 wt% can be other polymers than PE), and is thus also suitable for being recycled.

The films according to the present invention are highly useful for being used in various packaging applications, wherein applications related to food packaging are preferred. Furthermore the films according to the present invention may be used as a layer in multilayer polyethylene based blown films, preferably as core layer in multilayer polyethylene based blown films.

The invention will be further described with reference to the following non-limiting examples.

**Determination methods**

Unless otherwise stated in the description or in the experimental part, the following methods were used for the property determinations of the polymers (including its fractions and components) and/or any sample preparations thereof as specified in the text or experimental part.

**Melt Flow Rate**

The melt flow rate (MFR) was determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

*Calculation* of $MFR_2$ *of Component B and of Fraction (A-2)*

$$logA = x \cdot logB + (1-x) \cdot logC$$

$$C = 10^\wedge \frac{(logA - x.logB)}{(1-x)}$$

*For Component B:*

B = $MFR_2$ of Component (A)
C = $MFR_2$ of Component (B)

A = final $MFR_2$ of multimodal metallocene catalysed linear low density polyethylene (mLLDPE)
X = weight fraction of Component (A)

*For Fraction (A-2):*

B = $MFR_2$ of $1^{st}$ fraction (A-1)
C = $MFR_2$ of $2^{nd}$ fraction (A-2)
A = final $MFR_2$ (mixture) of loop polymer (= Component (A))
X = weight fraction of the $1^{st}$ fraction (A-1).

**Density**

Density of the polymer was measured according to ISO 1183-1.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05,griffin07}. A total of 1024 (1k) transients were acquired per spectra. Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = (Btotal / (Etotal + Btotal + Htotal)$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the ββB2B2 site at 24.7 ppm accounting for the number of reporting sites per comonomer:

$$BEB = 2 * I\beta\beta B2B2$$

Due to the overlap of the *B2 and *βB2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = (Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = (Htotal / (Etotal + Btotal + Htotal)$$

The amount isolated 1-hexene incorporated in EEHEE sequences was quantified using the integral of the *B4 sites at 39.9 ppm accounting for the number of reporting sites per comonomer:

$$H = I_{*B4}$$

The amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

The total mole fraction of 1-hexene in the polymer was then calculated as:

$$fH = (Htotal / (Etotal + Btotal + Htotal)$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.

Parkinson, M., Klimke, K., Spiess, H.W., Wilhelm, M., Macromol. Chem. Phys. 2007;208:2128. Pollard, M., Klimke, K., Graf, R., Spiess, H.W., Wilhelm, M., Sperber, O., Piel, C., Kaminsky, W., Macromolecules 2004;37:813.

Filip, X., Tripon, C., Filip, C., J. Mag. Resn. 2005, 176, 239.

Griffin, J.M., Tripon, C., Samoson, A., Filip, C., and Brown, S.P., Mag. Res. in Chem. 2007 45, S1, S198.

Castignolles, P., Graf, R., Parkinson, M., Wilhelm, M., Gaborieau, M., Polymer 50 (2009) 2373 Busico, V., Cipullo, R., Prog. Polym. Sci. 26 (2001) 443.

Busico, V., Cipullo, R., Monaco, G., Vacatello, M., Segre, A.L., Macromoleucles 30 (1997) 6251.

Zhou, Z., Kuemmerle, R., Qiu, X., Redwine, D., Cong, R., Taha, A., Baugh, D. Winniford, B., J. Mag. Reson. 187 (2007) 225.

Busico, V., Carbonniere, P., Cipullo, R., Pellecchia, R., Severn, J., Talarico, G., Macromol. Rapid Commun. 2007, 28, 1128.

Resconi, L., Cavallo, L., Fait, A., Piemontesi, F., Chem. Rev. 2000, 100, 1253.

## GPC-VISC-LS analysis for determination of branching factor g'

A PL 220 (Agilent) GPC equipped with an infra-red detector (IR4 (PolymerChar, Spain), an online four capillary bridge viscometer (PL-BV 400-HT), and a dual light scattering detector (PL-LS 15/90 light scattering detector) with a 15° and 90° angle was used. 3x Olexis and 1x Olexis Guard columns from Agilent as stationary phase and 1,2,4-trichlorobenzene (TCB, stabilized with 250 mg/L 2,6-Di tert butyl-4-methyl-phenol) as mobile phase at 160 °C and at a constant flow rate of 1 mL/min was applied. 200 μL of sample solution were injected per analysis. All samples were prepared by dissolving 8.0 - 10.0 mg of polymer in 10 mL (at 160 °C) of stabilized TCB (same as mobile phase) for 2,5 hours at 160°C under continuous gentle shaking. The injected concentration of the polymer solution at 160°C ($c_{160°C}$) was determined in the following way.

$$c_{160°C} = \frac{w_{25}}{V_{25}} * 0{,}8772$$

With: $w_{25}$ (polymer weight) and $V_{25}$ (Volume of TCB at 25°C).

### *GPC-VISC-LS processing*

For the GPC light scattering approach ($GPC_{LS}$) the inter detector delay volumes were determined with a narrow PS standard (MWD = 1.01) with a molar mass of 130000 g/mol. The corresponding detector constants for the light scattering detector and the online viscometer were determined with the broad standard NIST1475A (Mw = 52000 g/mol and IV=1,01 dl/g). The corresponding used dn/dc for the used PE standard in TCB was 0,094 $cm^3/g$. The calculation was performed using the Cirrus Multi-Offline SEC-Software Version 3.2 (Agilent). The molar mass at each elution slice was calculated by using the 15° light scattering angle. Data collection, data processing and calculation were performed using the Cirrus Multi SEC-Software Version 3.2. The molecular weight was calculated using the option in the Cirrus software "use LS 15 angle" in the field *"sample calculation options* subfield *slice MW data from".* As dn/dc used for the determination of molecular weight a value of 0.094 was used.

This molecular weight at each slice is calculated in the manner as it is described by by C. Jackson and H. G. Barth at low angle. For the low and high molecular region in which less signal of the LS detector or RI detector respectively was achieved a linear fit was used to correlate the elution volume to the corresponding molecular weight. Depending on the sample the region of the linear fit was adjusted.

Molecular weight averages (Mz(LS), Mw(LS) and Mn(LS)), Molecular weight distribution (MWD) and its broadness, described by polydispersity, PD(LS)= Mw(LS)/Mn(LS) (wherein Mn(LS) is the number average molecular weight and Mw(LS) is the weight average molecular weight obtained from GPC-LS) were calculated by Gel Permeation Chromatography (GPC) using the following formulas:

$$M_n(LS) = \frac{\sum_{i=1}^{N} A_i}{\sum(A_i/M_{i(LS)})} \quad (1)$$

$$M_w(LS) = \frac{\sum_{i=1}^{N}(A_i x\, M_{i(LS)})}{\sum A_i} \quad (2)$$

$$M_z(LS) = \frac{\sum_{i=1}^{N}(A_i\, x\, M_{i(LS)}^2)}{\sum(A_i/M_i(LS))} \quad (3)$$

For a constant elution volume interval $\Delta V_i$, where $A_i$ and $M_{i(LS)}$ are the chromatographic peak slice area and polyolefin molecular weight (MW) determined by GPC-LS.

*Branching Calculation g'(90-100% cum) or g' (85-100% cum)*

The relative amount of branching is determined using the g'-index of the branched polymer sample. The long chain branching (LCB) index is defined as $g' = [\eta]_{br}/[\eta]_{lin}$. It is well known if the g' value increases the branching content decreases. [η] is the intrinsic viscosity at 160 °C in TCB of the polymer sample at a certain molecular weight and is measured by an online viscosity and a concentration detector, where $[\eta]_{lin}$ is the intrinsic viscosity of the linear polymer having the same chemical compostion. The intrinsic viscosities were measured as described in the handbook of the Cirrus Multi-Offline SEC-Software Version 3.2 with use of the Solomon-Gatesman equation. The $[\eta]_{lin}$ at a certain molecular weight was obtained using the Mark Houwink constant:

$$IV = K_{LLDPE} * M^{\alpha} \quad \text{(equation 1)}$$

The constants K and α are specific for a polymer-solvent system and M is the molecular weight obtained from LS analysis.

To encounter for the amount of comonomer content in the polyethylene-co-alpha-olefine the $[K]_{LLDPE}$ needs to be modified in the following way:

$$K_{LLDPE} = (1\text{-}(1\text{-}2/x * \text{wt.-\%*(alpha-olefine)})^{1+\alpha} * K_{PE} \quad \text{(equation 2)}$$

Where x is the amount of C atoms in the alpha olefine and $K_{PE}$ is determined by analysing the linear homo PE (NIST 1475a) using α = 0,725 and the content of the alpha-olefine is determined by $^{13}$C-NMR. Normally $K_{PE}$ is between 0.00039 and 0.00042.

An IR detector determines the necessary concentration of each elution slice.

$[\eta]_{lin}$ is the intrinsic viscosity of a linear sample and $[\eta]_{br}$ the viscosity of a branched sample of the same molecular weight and chemical composition. By dividing the intrinsic viscosity of a branched sample $[IV_b]$ with the intrinsic viscosity of a linear polymer $[IV_l]$ at the same molecular weight, the viscosity branching factor g' can be calculated.

In this case the $g'_{(90-100)}$ and $g'_{(85-100)}$ are calculated by adding the product of $g'_M * a_M$ in the range where the cumulative fraction is 90% to 100% or respectively 85-100% and dividing it through the corresponded signal area of the concentration signal, $a_i$.

$$g'_{(90-100)} = \frac{\sum_{90}^{100} a_i * \frac{[\eta]_{br,i}}{[\eta]_{lin,i}}}{\sum_{90}^{100} a_i} = \frac{\sum_{90}^{100} a_i * g'_i}{\sum_{90}^{100} a_i}$$

$$g'_{(85-100)} = \frac{\sum_{85}^{100} a_i * \frac{[\eta]_{br,i}}{[\eta]_{lin,i}}}{\sum_{85}^{100} a_i} = \frac{\sum_{85}^{100} a_i * g'_i}{\sum_{85}^{100} a_i}$$

**Dart drop strength (DDI): Impact resistance by free-falling dart method**

This test method covers the determination of the energy that causes films to fail under specified conditions of impact of a free-falling dart from a specified height that would result in failure of 50 % of the specimens tested (ASTM D1709; Alternative testing technique - method A).

By this technique, successive groups of twenty specimens each are tested. One missile weight is employed for each group and missile weight is varied in increments from group to group.

Deviating from ASTM D1709-16a the test was performed on several film strips of a sample with at least 4 different weights. 20 specimens per weight were tested, so that a break range of 5 % - 95 % was covered. It must be ensured that at least one weight is determined in the breaking range of 5 % - 25 %, at least two weights in the breaking range of 30 % - 70 %, and at least one weight in the breaking range of 75 % - 95 %. The selection of the weights can be done in uneven steps. A film strip was taken across the width of the sample and measured on a thickness measuring device.

Standard conditions:

Conditioning time: > 96 h
Test temperature: 23 °C
Dart head material: phenolic
Dart diameter: 38 mm
Drop height: 660 mm

Results:

Impact failure weight - 50% [g].

**Tensile modulus**

Tensile modulus (E-Mod (MPa) was measured in machine and/or transverse direction according to ISO 527-3 on film samples prepared as described under the Film Sample preparation with film thickness of 40 μm and at a cross head speed of 1 mm/min for the modulus.

**Haze and Clarity**

Haze and clarity was determined according to ASTM D 1003-00 on films as produced **indicated below.**

**Film sample preparation**

The test films consisting of the inventive blend and respective comparative films of 40 μm thickness, were prepared using a Collin 30 lab scale mono layer blown film line. The film samples were produced at 194°C, a 1:2.5 blow-up ratio, frostline distance of 120 mm.

The compounding for the blends was done on a co-rotating TSE16 twin screw extruder with melt temperature of 200°C. The blends further contained 0.05 wt% of Irganox 1010 FF (BASF) (AO1) and 0.2 wt% of Irgafos 168 (FF) (BASF) (AO2) and 0.027wt% Dynamar FX 5922 as processing aid (PPA).

***Examples:***

Materials used:

For CE2:

FT3200: LDPE (PE homopolymer) commercially available from Borealis density is 920 kg/m$^3$ and $MFR_2$ 0.25 g/10min. $g'_{85-100}$ = 0.37; $g'_{90-100}$ = 0.32

**a) Production of mLLDPE**

***Cat.Example:* Catalyst preparation (CAT1)**

Loading of SiO2:

10 kg of silica (PQ Corporation ES757, calcined 600°C) was added from a feeding drum and inertized in the reactor until $O_2$ level below 2 ppm was reached.

*Preparation of MAO/tol/MC:*

30 wt% MAO in toluene (14.1 kg) was added into another reactor from a balance followed by toluene (4.0 kg) at 25°C (oil circulation temp) and stirring 95 rpm. Stirring speed was increased 95 rpm -> 200 rpm after toluene addition, stirring time 30 min. Metallocene Rac-dimethylsilanediylbis{2-(5-(trimethylsilyl)furan-2-yl)-4,5-dimethylcyclopentadien-1-yl}zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during the MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour.

After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

**Polymerization:**

Borstar pilot plant with a 3-reactor set-up (loop1 - loop2 - GPR 1) and a prepolymerization loop reactor.

mLLDPE was produced by using the polymerization conditions as given in Table 1.

**Table 1:** Polymerization conditions for mLLDPE

| | mLLDPE |
|---|---|
| **Catalyst** | CAT1 |
| **Prepoly reactor** | |
| Temp. (°C) | 50 |
| Press. (kPa) | 5615 |
| C2 (kg/h) | 4.0 |
| H2(g/h) | 0.0 |
| C4 (g/h) | 79.0 |
| Split (wt%) | 3.4 |
| **loop 1 Fraction (A-1)** | |
| Temp. (°C) | 85 |
| Press. (kPa) | 5543 |
| C2 conc. (mol%) | 2.9 |
| H2/C2 ratio (mol/kmol) | 0.56 |
| C4/C2 ratio (mol/kmol) | 148.0 |
| Split (wt%) | 18.5 |
| Density (kg/m3) of loop 1 material (fraction (A-1)) | 930 |
| MFR2 (g/10 min) of loop 1 material (fraction (A-1)) | 5.1 |
| **loop 2** | |
| Temp. (°C) | 85 |
| Press. (kPa) | 5335 |
| C2 conc. (mol%) | 3.8 |
| H2/C2 ratio (mol/kmol) | 0.3 |
| C4/C2 ratio (mol/kmol) | 108 |
| Split (wt%) | 19.0 |
| Density (kg/m3) after loop 2 (component (A)) | 930.4 |
| MFR2 (g/10 min) after loop 2 (component (A)) | 5.0 |
| MFR2 (g/10 min) of loop 2 material (fraction (A-2)) | 4.9 |
| Density (kg/m3) of loop 2 material (fraction (A-2)) | 931 |
| C4 (wt%) after loop 2 material (Component (A)) | 3.7 |
| **GPR** | |
| Temp. (°C) | 70 |
| Press. (kPa) | 2000 |
| H2/C2 ratio (mol/kmol) | 1.10 |
| C6/C2 ratio (mol/kmol) | 8.8 |
| Split (wt%) | 59.1 |
| MFR2 (g/10 min) of GPR material (Component (B)) | 0.6 |
| Density (kg/m3) of GPR material (Component (B)) | 909 |
| C6 (wt%) of GPR material Component (B)) | 12,7 |

**Table 2:** Material properties of mLLDPE

| Material | mLLDPE |
|---|---|
| $MFR_2$ (g/10 min) (final) | 1.5 |
| $MFR_{21}$ (g/10 min) | 44.1 |
| $MFR_{21}/MFR_2$ | 27.6 |
| Density (kg/m$^3$) | 918 |
| C4 (wt%) | 1.5 |
| C6 (wt%) | 7.5 |
| g'85-100 | 0.94 |

**b) Preparation of mPE:**

**Cat.Example: Catalyst preparation (CAT2)**

**Complex preparation:**

(Phenyl)(cyclohexyl)methylene(cyclopentadienyl)(2,7-di-tert-butylfluoren-9-yl)zirconum dichloride

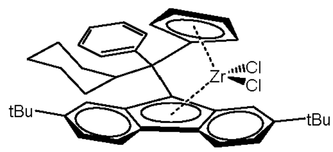

The complex was prepared in analogy to the description in WO2018108918, Complex preparation Inventive Complex (IC), Septs 1 to 3, with the exception that in step 3 $ZrCl_4$ instead of $HfCl_4$ was added.

To a solution of 18.1 g (35.1 mmol) of 1-phenyl-1-cyclohexyl-1-cyclopentadienyl-1-(2,7-di-*tert*-butylfluorenyl) methane in 300 ml of ether cooled to -78°C 28.9 ml (70.2 mmol) of 2.43 M $^n$BuLi in hexanes was added in one portion. This mixture was stirred overnight at room temperature. The resulting orange suspension was cooled to -78°C, and 8.19 g (35.15 mmol) of $ZrCl_4$ was added. The formed mixture was stirred for 24 h at room temperature to give a light red solution with a lot of bright red precipitate. The reaction mixture was evaporated to dryness and the residue was stirred with 100 ml of warm toluene. The formed suspension was filtered through a glass frit (G4), and the filtrate was evaporated to ca. 40 ml. White solid precipitated from this solution for 30 min at room temperature was filtered off (G4), washed with 2 x 10 ml of toluene and discarded. The mother liquor was evaporated to ca. 30 ml, and 15 ml of n-hexane was added to this solution. The precipitated red powder was immediately filtered off and dried in vacuum to give 8.60 g (36%) of the title zirconocene.
Anal. calc. for $C_{39}H_{44}Cl_2Zr$: C, 69.41; H, 6.57. Found: C, 69.23; H, 6.70.
$^1$H NMR ($CDCl_3$): $\delta$ = 8.05 (d, *J* = 9.2 Hz, 1H), 7.97 (d, *J* = 8.8 Hz, 1H), 7.75 (br.d, *J* = 7.5 Hz, 1H), 7.69-7.64 (m, 2H), 7.58-7.49 (m, 3H), 7.46-7.36 (m, 2H), 6.40 (m, 1H), 6.24 (m, 1H), 5.92 (d, *J* = 0.9 Hz, 1H), 5.79 (m, 1H), 5.56 (m, 1H), 3.21 (tm, *J* = 11.5 Hz, 1H), 2.33 (br.d, *J* = 13.0 Hz, 1H), 2.15 (br.d, *J* = 12.7 Hz, 1H), 1.89 (br.t, *J* = 14.2 Hz, 2H), 1.76 (br.d, *J* = 13.2 Hz, 1H), 1.67-1.54 (m, 1H), 1.53-1.30 (m, 2H), 1.41 (s, 9H), 1.14-1.00 (m, 1H), 0.95 (s, 9H), 0.91-0.78 (m, 1H).
$^{13}C\{^1H\}$ NMR ($CDCl_3$): $\delta$ = 152.60, 149.80, 138.89, 131.80, 129.02, 127.74, 127.46, 127.38, 124.50, 124.24, 124.21, 123.51, 123.45, 121.63, 121.33, 120.55, 120.18, 119.34, 118.72, 117.78, 112.11, 102.59, 101.29, 78.08, 58.19, 43.76, 35.61, 34.87, 31.28, 30.46, 28.94, 28.15, 27.29, 26.80, 26.59.

*Preparation of MAO-silica support*

A steel reactor equipped with a mechanical stirrer and a filter net was flushed with nitrogen and the reactor temperature was set to 10°C. Next silica grade PD19057 from PQ Corporation, pre-calcined at 600°C (5.0 kg) was added from a feeding drum and inertised in the reactor to reach O2 level below 2 ppm. Then toluene (21.6 kg) was added. The mixture was stirred (40 rpm) for 30 min. Next 30 wt% solution of MAO in toluene (11.8 kg) from Lanxess was added via feed

line on the top of the reactor within 90 min. The reaction mixture was then heated up to 90°C within 135 min and stirred at 90°C for additional two hours. The slurry was allowed to settle 15 min and the mother liquor was filtered off. The remaining solid was washed twice with toluene (21.6 kg). The target temperature for 30 minutes washings was 90°C for the 1st toluene wash and 60°C for the 2nd toluene wash. Settling times prior to filtering were 15 min. The solid was washed with heptane (17.1 kg), target temp at 60°C, followed by settling and filtration. Finally MAO treated $SiO_2$ was dried at 60° (oil circulation temp) under nitrogen flow for 2 hours and then for 5 hours under vacuum under same nitrogen flow with stirring (5 rpm). Target HC level was < 2%. MAO treated support was collected as a free-flowing white powder found to contain 13.4% Al by weight.

*Catalyst System CAT-2 (Preparation of catalyst system)*

30 wt% MAO in toluene (1.6 kg) was added into a steel nitrogen blanked reactor via a burette at 25 °C (oil circulation temp). Toluene (5.6 kg) was then added under stirring (400 rpm). The above prepared metallocene complex (177 g) was added from a metal cylinder followed by flushing with 0.9 kg toluene. The mixture was stirred (400 rpm) for 120 minutes at 25°C (oil circulation temp). The resulting solution was added to a stirred cake of MAO-silica support prepared as described above within 40 min, followed by 2 h stirring time at 25°C (oil circulation temp). After stirring "dry mixture" was stabilised for 12 h at 25°C (oil circulation temp), stirring 0 rpm. Reactor was turned 20° (back and forth) and stirring was turned on (5 rpm) for few rounds once an hour. Next the solid was washed with heptane (25.7 kg), target temp 25°C, followed by settling 15 min and filtration.

Finally catalyst was dried under N2 flow at 60°C (oil circulation temp) for 2h and additionally for 7 h under vacuum under same nitrogen flow with stirring (5 rpm). Target HC level was < 2%.

Dried catalyst was sampled in the form of free flowing powder containing 15.0 wt% Al and 0.22 wt% Zr.

After drying catalyst was mixed with vacuum-treated oil (25.3 kg) at 50°C (oil circulation temp) and taken out into a drum.

***Polymerization conditions for mPE***

Polymerisation was performed in a stirred autoclave with a volume of 5.3 L. The evacuated autoclave was filled with 800 g propane. 0.12 mmol triethylaluminium (0.62 mol/l solution in heptane), TEAL, were added using a stream of additional 100 g propane. 16 g of ethene and 1.3 mg hydrogen were added batch-wise and the reactor was heated up to the desired prepolymerization temperature of 60 °C. Then 255 mg of catalyst were weighed into a steel vial inside a glove box and suspended in 3 ml heptane. The vial was attached to the polymerisation autoclave and the suspension was flushed into the reactor with 100 g propane. For prepolymerization, the reactor was stirred for 45 min at 60 °C. The pressure was kept constant at 20.9 barg by feeding ethene with a flow meter. Then, for the slurry polymerization phase, the temperature was increased to 85 °C. The transition phase required 13 min. 373 mg of hydrogen and 12.9 g of 1-butene for the main slurry step were fed into the reactor when the temperature reached 85 °C. In parallel, ethene was fed as batch until the desired polymerisation pressure of 43.3 barg was reached. The reactor was stirred at 85 °C. The pressure was kept constant by feeding ethene, 1-butene and hydrogen in a fixed ratio (1-butene/ethene = 0.031 g/g, hydrogen/ethene = 0,000068 g/g). After consuming 200 g ethene, the reaction was stopped by venting the reactor.

After evacuating the reactor following the completion of the slurry phase, for the gas phase polymerization, the reactor temperature was set to 75 °C. The reactor was refilled with propane until a pressure of 10 barg was reached. 49 mg hydrogen and 18 g 1-hexene were fed to the reactor as batch. In parallel, ethene was fed until the reactor pressure reached the final total pressure of 20 barg. During polymerization, the pressure was kept constant by feeding ethylene, 1-hexene and hydrogen in a fixed ratio (1-hexene/ethene = 0.17 g/g, hydrogen/ethene = 0.000068 g/g). After consumption of 236 g ethylene the reaction was stopped, vented and the final polymer material collected.

513.5 g of mPE have been collected.

After taking the mPE out of the reactor, the polymer was dried overnight in a fume hood. About 50 g of the polymer were stabilised with 0.5 wt% Irganox B225. The stabiliser was applied by dissolving it in acetone, adding the solution to the polymer powder and evaporating the solvent overnight.

**Table 3: Properties of mPE**

| Material | mPE |
|---|---|
| $MFR_2$ (g/10 min) (final) | 0.2 |
| $MFR_{21}$ (g/10 min) | 19 |
| $MFR_{21}/MFR_2$ | 95 |
| Density (kg/$m^3$) | 914 |

(continued)

| Material | mPE |
|---|---|
| C4 (wt%) | 1.27 |
| C6 (wt%) | 8.73 |
| g'85-100 | 0.82 |
| g'90-100 | 0.79 |

## Monolayer blown films

The following films have been produced with the above described method (film sample preparation).

**Table 4:** Inventive and Comparative Films

| | | CE1 | CE2 | IE1 |
|---|---|---|---|---|
| mLLDPE | wt% | 99.723 | 89.723 | 89.723 |
| AO1 | wt% | 0.05 | 0.05 | 0.05 |
| AO2 | wt% | 0.2 | 0.2 | 0.2 |
| PPA | wt% | 0.027 | 0.027 | 0.027 |
| mPE | wt% | - | - | 10 |
| FT3200 | wt% | - | 10 | - |
| MFR ratio mPE/mLLDPE | | - | 0.17 | 0.13 |
| Film properties | | | | |
| Haze | % | 13 | 7 | 7 |
| DDI | g | 792 | 696 | 923 |
| Clarity | % | 98.2 | 98.9 | 99.3 |

The data demonstrates that using the specific mLLDPE blended with the bimodal mPE leads to an excellent combination of good DDI and good optics.

The addition of the HDPE FT3200 reduces haze, but on the expense of impact (DDI). The bimodal mPE reduces the haze comparable to FT3200, but leading at the same time to a clearly higher impact (DDI).

## Claims

**1.** A polyethylene blend comprising

a) 51.0 wt% to 99.0 wt%, based on the total weight of the polyethylene blend, of a multimodal metallocene catalysed linear low density polyethylene (mLLDPE) which consists of

(i) 30.0 to 70.0 wt% of an ethylene-1-butene polymer component (A), and
(ii) 70.0 to 30.0 wt% of an ethylene-1-hexene polymer component (B),
whereby the ethylene-1-butene polymer component (A) has

a density in the range of 920 to 950 kg/$m^3$,
a $MFR_2$ (190°C, 2.16 kg, ISO 1133) in the range of 2.0 to 400.0 g/10 min, and

the ethylene polymer component (B) has

a density in the range of 885 to 918 kg/$m^3$,
a $MFR_2$ (190°C, 2.16 kg, ISO 1133) in the range of 0.01 to 1.5 g/10 min,

whereby the multimodal metallocene catalysed linear low density polyethylene (mLLDPE) has a density in the range of 905 to 940 kg/m$^3$,

a $MFR_2$ (190°C, 2.16 kg, ISO 1133) in the range of 0.3 to 5.0 g/10 min and
a ratio of the $MFR_{21}$ (190°C, 21.6 kg, ISO 1133) to $MFR_2$ (190°C, 2.16 kg, ISO 1133), $MFR_{21}/MFR_2$, in the range of 20 to 70;
a branching index g $'_{85-100}$ (determined by gel permeation chromatography (GPC) as described in the experimental part) of < 1.00 and

b) 1.0 to 49.0 wt%, based on the total weight of the polyethylene blend, of a branched metallocene catalysed polyethylene copolymer (mPE), whereby said mPE has

a density in the range of 905 to 940 kg/m$^3$;
a $MFR_2$ (190°C, 2.16 kg, ISO 1133) in the range of 0.01 to 5.0 g/10 min, and
a branching index g $'_{85-100}$ (determined by gel permeation chromatography (GPC) as described in the experimental part) in the range of 0.50 to < 0.90,

whereby the ratio of the $MFR_2$ of the mPE to the $MFR_2$ of the mLLDPE is < 1.0 and
the branching index g $'_{85-100}$ of the mPE is lower than the branching index g $'_{85-100}$ of the mLLPDE.

**2.** The polyethylene blend according to claim 1, wherein in the multimodal metallocene catalysed linear low density polyethylene (mLLDPE) the ethylene-1-butene polymer component (A) consists of an ethylene polymer fraction (A-1) and an ethylene polymer fraction (A-2),

wherein the ethylene polymer fraction (A-1) has

a density in the range of 920 to 950 kg/m$^3$, preferably of 922 to 945 kg/m$^3$, more preferably of 925 to 940 kg/m$^3$, like 928 to 935 kg/m$^3$; and
a $MFR_2$ (190°C, 2.16 kg, ISO 1133) in the range of 1.0 to 800.0 g/10 min, preferably of 1.5 to 400.0 g/10 min, more preferably of 2.0 to 200.0 g/10 min and even more preferably of 2.5 to 50.0 g/10 min, and

the ethylene polymer fraction (A-2) has

a density in the range of 920 to 950 kg/m$^3$, preferably of 925 to 945 kg/m$^3$, and
a $MFR_2$ (190°C, 2.16 kg, ISO 1133) in the range of 1.5 to 400.0 g/10 min, preferably of 2.0 to 200.0 g/10 min, more preferably of 2.5 to 40.0 g/10 min and most preferably of 3.0 to 10.0 g/10 min.

**3.** The polyethylene blend according to claim 1 or 2, wherein in the multimodal metallocene catalysed linear low density polyethylene (mLLDPE)

- the ethylene polymer component (A) has a $MFR_2$ (190°C, 2.16 kg, ISO 1133) of 2.5 to 300 g/10 min, preferably of 3.0 to 200 g/10 min and more preferably of 3.2 to 100 g/10 min, still more preferably of 3.5 to 20 g/10 min and
- the ethylene polymer component (B) has a $MFR_2$ (190°C, 2.16 kg, ISO 1133) of 0.05 to 1.5 g/10 min, preferably of 0.1 to 1.2 g/10 min and more preferably of 0.2 to 1.0 g/10 min.

**4.** The polyethylene blend according to any of the preceding claims, wherein in the multimodal metallocene catalysed linear low density polyethylene (mLLDPE) the ratio of the $MFR_{21}$ (190°C, 21.6 kg, ISO 1133) to $MFR_2$ (190°C, 2.16 kg, ISO 1133), $MFR_{21}/MFR_2$ is in the range of 22 to 50 and preferably from 24 to 35.

**5.** The polyethylene blend according to any of the preceding claims, wherein the multimodal metallocene catalysed linear low density polyethylene (mLLDPE) has a branching index g $'_{85-100}$ (determined by gel permeation chromatography (GPC) as described in the experimental part) in the range of 0.80 to 0.98, preferably 0.85 to 0.96.

**6.** The polyethylene blend according to any of the preceding claims, wherein in the multimodal metallocene catalysed linear low density polyethylene (mLLDPE) the total amount of 1-butene, based on the multimodal metallocene catalysed linear low density polyethylene (mLLDPE) is in the range of 0.1 to 3.0 wt%, preferably 0.5 to 2.5 wt% and more preferably 0.8 to 2.0 wt% and the total amount of 1-hexene, based on the multimodal metallocene catalysed linear low density polyethylene (mLLDPE) is in the range of 2.0 to 20.0 wt%, preferably 4.0 to 18.0 wt% and more

preferably 6.0 to 15.0 wt% and

the total amount of 1-butene, present in the ethylene-1-butene polymer component (A) is in the range of 0.5 to 8.0 wt%, preferably of 0.8 to 6.0 wt%, more preferably of 1.0 to 5.0 wt%, even more preferably of 1.5 to 4.5 wt%, based on the ethylene-1-butene polymer component (A) and
the total amount (wt%) of 1-hexene, present in the ethylene-1-hexene polymer component (B) is in the range of 8.0 to 25.0 wt%, preferably of 9.0 to 20.0 wt%, more preferably of 10.0 to 18.0 wt%, based on the ethylene-1-hexene polymer component (B).

**7.** The polyethylene blend according to any of the preceding claims, wherein the multimodal metallocene catalysed linear low density polyethylene (mLLDPE) is produced in the presence of metallocene complex of formula (I):

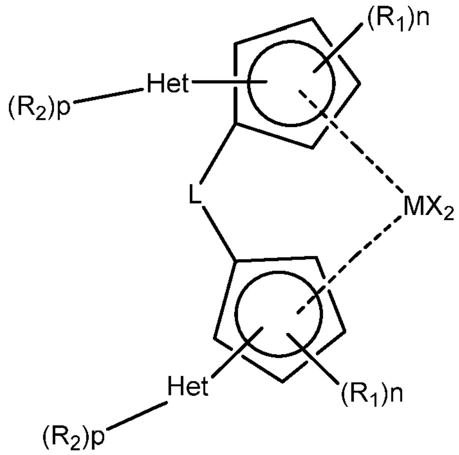

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is $-R'_2Si-$, wherein each R' is independently $C_{1-20}$-hydrocarbyl or $C_{1-10}$-alkyl substituted with alkoxy having 1 to 10 carbon atoms;
M is Ti, Zr or Hf;
each $R_1$ is the same or different and is a $C_{1-6}$-alkyl group or $C_{1-6}$-alkoxy group; each n is 1 to 2;
each $R_2$ is the same or different and is a $C_{1-6}$-alkyl group, $C_{1-6}$-alkoxy group or - $Si(R)_3$ group;
each R is $C_{1-10}$-alkyl or phenyl group optionally substituted by 1 to 3 $C_{1-6}$-alkyl groups; and
each p is 0 to 1.

**8.** The polyethylene blend according to any of the preceding claims, wherein the mPE has a $MFR_2$ (190°C, 2.16 kg, ISO 1133) in the range of 0.05 to 3.0 g/10 min, preferably in the range of 0.1 to 1.5 g/10 min, and more preferably in the range of 0.1 to 1.0 g/10min
and
a density in the range of 908 to 930 kg/$m^3$, preferably in the range of 910 to 925 kg/$m^3$ and more preferably in the range of 912 to 920 kg/$m^3$.

**9.** The polyethylene blend according to any of the preceding claims, wherein the mPE has a branching index $g'_{85-100}$ (determined by gel permeation chromatography (GPC) as described in the experimental part) in the range of 0.60 to 0.88, preferably of 0.70 to 0.86 and more preferably of 0.75 to 0.85.

**10.** The polyethylene blend according to any of the preceding claims, wherein the mPE is a bimodal polyethylene copolymer consisting of

30.0 to 70.0 wt%, based on the mPE, of an ethylene-1-butene polymer component (X), and
70.0 to 30.0 wt%, based on the mPE, of an ethylene-1-hexene polymer component (Y), whereby
the ethylene polymer component (X) has a $MFR_2$ (190°C, 2.16 kg, ISO 1133) in the range of 1.0 to 40 g/10 min, preferably of 2.0 to 30 g/10 min, more preferably of 3.0 to 20 g/10 min, even more preferably of 4.0 to 10 g/10 min and

a density in the range of 920 to 950 kg/m$^3$, preferably of 925 to 945 kg/m$^3$, more preferably 930 to 940 kg/m$^3$ and the ethylene polymer component (Y) has a $MFR_2$ (190°C, 2.16 kg, ISO 1133) in the range of 0.01 to 1.5 g/10 min, preferably of 0.02 to 1.0 g/10 min, more preferably of 0.03 to 0.8 g/10 min and even more preferably of 0.03 to 0.5 g/10 min and
a density in the range of 885 to 910 kg/m$^3$, preferably of 890 to 908 kg/m$^3$ and more preferably of 892 to 905 kg/m$^3$.

**11.** The polyethylene blend according to any of the preceding claims, wherein the blend consists of

a) 65.0 wt% to 98.0 wt%, preferably 75.0 wt% to 96.0 wt% and more preferably 80.0 wt% to 92.0 wt%, based on the total weight of the polyethylene blend, of the a multimodal metallocene catalysed linear low density polyethylene (mLLDPE) and
b) 2.0 wt% to 35.0 wt%, preferably 4.0 wt% to 25.0 wt% and more preferably 8.0 wt% to 20.0 wt%, based on the total weight of the polyethylene blend, of the metallocene catalysed polyethylene copolymer (mPE).

**12.** Use of the polyethylene blend according to any of the preceding claims for the preparation of a monolayer blown film.

**13.** A monolayer blown film, comprising the polyethylene blend according to any of the preceding claims 1 to 11, wherein the film is **characterized by** having

a) a dart-drop impact strength (DDI) determined according to ASTM D1709, method A on a 40 $\mu$m monolayer test blown film of at least 750 g up to 1500 g, preferably 800 g up to 1400 g and more preferably 850 g up to 1200 g, and
b) a haze (measured on a 40 $\mu$m monolayer test blown film according to ASTM D 1003-00) of below 10 %, preferably between 2 % and 9 %, more preferably between 4 % and 8 %, and
c) a clarity (measured on a 40 $\mu$m monolayer test blown film according to ASTM D 1003-00) of above 98.0%, preferably of at least 98.5%, more preferably at least 99.0%.

**14.** Use of the film according to claims 13 as packing material, in particular as a packing material for food.

**15.** Use of the film according to claim 13 as a layer in multilayer polyethylene based blown films, preferably as core layer in multilayer polyethylene based blown films.

## Patentansprüche

**1.** Polyethylenmischung, die umfasst

a) 51,0 Gew.-% bis 99,0 Gew.-%, bezogen auf das Gesamtgewicht der Polyethylenmischung, eines multimodalen metallocenkatalysierten linearen Polyethylens niedriger Dichte (mLLDPE), das besteht aus

(i) 30,0 bis 70,0 Gew.-% einer Ethylen-1-Buten-Polymerkomponente (A) und
(ii) 70,0 bis 30,0 Gew.-% einer Ethylen-1-Hexen-Polymerkomponente (B),
wobei die Ethylen-1-Buten-Polymerkomponente (A) aufweist

eine Dichte im Bereich von 920 bis 950 kg/m$^3$,
einen $MFR_2$ (190 °C, 2,16 kg, ISO 1133) im Bereich von 2,0 bis 400,0 g/10 min, und

die Ethylenpolymerkomponente (B) aufweist

eine Dichte im Bereich von 885 bis 918 kg/m$^3$,
einen $MFR_2$ (190 °C, 2,16 kg, ISO 1133) im Bereich von 0,01 bis 1,5 g/10 min,

wobei das multimodale metallocenkatalysierte lineare Polyethylen niedriger Dichte (mLLDPE) aufweist

eine Dichte im Bereich von 905 bis 940 kg/m$^3$,
einen $MFR_2$ (190 °C, 2,16 kg, ISO 1133) im Bereich von 0,3 bis 5,0 g/10 min und
ein Verhältnis des $MFR_{21}$ (190 °C, 21,6 kg, ISO 1133) zum $MFR_2$ (190 °C, 2,16 kg, ISO 1133), $MFR_{21}/MFR_2$, im Bereich von 20 bis 70;
einen Verzweigungsindex $g'_{85-100}$ (bestimmt durch Gelpermeationschromatographie (GPC) wie im

experimentellen Teil beschrieben) von < 1,00, und

b) 1,0 bis 49,0 Gew.-%, bezogen auf das Gesamtgewicht der Polyethylenmischung, eines verzweigten metallocenkatalysierten Polyethylen-Copolymers (mPE), wobei das mPE aufweist

eine Dichte im Bereich von 905 bis 940 kg/$m^3$;
einen $MFR_2$ (190 °C, 2,16 kg, ISO 1133) im Bereich von 0,01 bis 5,0 g/10 min, und
einen Verzweigungsindex $g'_{85-100}$ (bestimmt durch Gelpermeationschromatographie (GPC) wie im experimentellen Teil beschrieben) im Bereich von 0,50 bis < 0,90,

wobei das Verhältnis des $MFR_2$ des mPE zum $MFR_2$ des mLLDPE < 1,0 ist und der Verzweigungsindex $g'_{85-100}$ des mPE niedriger als der Verzweigungsindex $g'_{85-100}$ des mLLPDE ist.

**2.** Polyethylenmischung nach Anspruch 1, wobei in dem multimodalen metallocenkatalysierten linearen Polyethylen niedriger Dichte (mLLDPE) die Ethylen-1-Buten-Polymerkomponente (A) aus einer Ethylenpolymerfraktion (A-1) und einer Ethylenpolymerfraktion (A-2) besteht,

wobei die Ethylenpolymerfraktion (A-1) aufweist

eine Dichte im Bereich von 920 bis 950 kg/$m^3$, bevorzugt von 922 bis 945 kg/$m^3$, stärker bevorzugt von 925 bis 940 kg/m3, wie 928 bis 935 kg/$m^3$; und
einen $MFR_2$ (190 °C, 2,16 kg, ISO 1133) im Bereich von 1,0 bis 800,0 g/10 min, bevorzugt von 1,5 bis 400,0 g/10 min, stärker bevorzugt von 2,0 bis 200,0 g/10 min und noch stärker bevorzugt von 2,5 bis 50,0 g/10 min, und

die Ethylenpolymerfraktion (A-2) aufweist

eine Dichte im Bereich von 920 bis 950 kg/$m^3$, bevorzugt von 925 bis 945 kg/$m^3$, und
einen $MFR_2$ (190 °C, 2,16 kg, ISO 1133) im Bereich von 1,5 bis 400,0 g/10 min, bevorzugt von 2,0 bis 200,0 g/10 min, stärker bevorzugt von 2,5 bis 40,0 g/10 min und am stärksten bevorzugt von 3,0 bis 10,0 g/10 min.

**3.** Polyethylenmischung nach Anspruch 1 oder 2, wobei in dem multimodalen metallocenkatalysierten linearen Polyethylen niedriger Dichte (mLLDPE)

- die Ethylenpolymerkomponente (A) einen $MFR_2$ (190 °C, 2,16 kg, ISO 1133) von 2,5 bis 300 g/10 min, bevorzugt von 3,0 bis 200 g/10 min und stärker bevorzugt von 3,2 bis 100 g/10 min, noch stärker bevorzugt von 3,5 bis 20 g/10 min aufweist, und
- die Ethylenpolymerkomponente (B) einen $MFR_2$ (190 °C, 2,16 kg, ISO 1133) von 0,05 bis 1,5 g/10 min, bevorzugt von 0,1 bis 1,2 g/10 min und stärker bevorzugt von 0,2 bis 1,0 g/10 min aufweist.

**4.** Polyethylenmischung nach einem der vorstehenden Ansprüche, wobei in dem multimodalen metallocenkatalysierten linearen Polyethylen niedriger Dichte (mLLDPE) das Verhältnis des $MFR_{21}$ (190 °C, 21,6 kg, ISO 1133) zum $MFR_2$ (190 °C, 2,16 kg, ISO 1133), $MFR_{21}/MFR_2$, im Bereich von 22 bis 50 und bevorzugt von 24 bis 35 ist.

**5.** Polyethylenmischung nach einem der vorstehenden Ansprüche, wobei das multimodale metallocenkatalysierte lineare Polyethylen niedriger Dichte (mLLDPE) einen Verzweigungsindex $g'_{85-100}$ (bestimmt durch Gelpermeationschromatographie (GPC) wie im experimentellen Teil beschrieben) im Bereich von 0,80 bis 0,98, bevorzugt 0,85 bis 0,96 aufweist.

**6.** Polyethylenmischung nach einem der vorstehenden Ansprüche, wobei in dem multimodalen metallocenkatalysierten linearen Polyethylen niedriger Dichte (mLLDPE) die Gesamtmenge von 1-Buten, bezogen auf das multimodale metallocenkatalysierte lineare Polyethylen niedriger Dichte (mLLDPE), im Bereich von 0,1 bis 3,0 Gew.-%, bevorzugt 0,5 bis 2,5 Gew.-% und stärker bevorzugt 0,8 bis 2,0 Gew.-% ist und die Gesamtmenge von 1-Hexen, bezogen auf das multimodale metallocenkatalysierte lineare Polyethylen niedriger Dichte (mLLDPE), im Bereich von 2,0 bis 20,0 Gew.-%, bevorzugt 4,0 bis 18,0 Gew.-% und stärker bevorzugt 6,0 bis 15,0 Gew.-%, ist, und

die Gesamtmenge von 1-Buten, die in der Ethylen-1-Buten-Polymerkomponente (A) vorhanden ist, im Bereich von 0,5 bis 8,0 Gew.-%, bevorzugt von 0,8 bis 6,0 Gew.-%, stärker bevorzugt von 1,0 bis 5,0 Gew.-%, noch stärker

bevorzugt von 1,5 bis 4,5 Gew.-%, bezogen auf die Ethylen-1-Buten-Polymerkomponente (A), ist, und
die Gesamtmenge (Gew.-%) von 1-Hexen, die in der Ethylen-1-Hexen-Polymerkomponente (B) vorhanden ist, im Bereich von 8,0 bis 25,0 Gew.-%, bevorzugt von 9,0 bis 20,0 Gew.-%, stärker bevorzugt von 10,0 bis 18,0 Gew.-%, bezogen auf die Ethylen-1-Hexen-Polymerkomponente (B), ist.

**7.** Polyethylenmischung nach einem der vorstehenden Ansprüche, wobei das multimodale metallocenkatalysierte lineare Polyethylen niedriger Dichte (mLLDPE) in Gegenwart vom Metallocenkomplex der Formel (I) hergestellt wird:

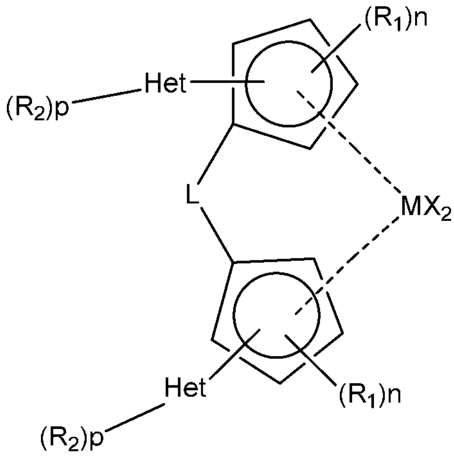

(I)

wobei jedes X unabhängig ein Halogenatom, eine $C_{1-6}$-Alkylgruppe, $C_{1-6}$-Alkoxygruppe, Phenyl- oder Benzylgruppe ist;
jedes Het unabhängig eine monocyclische heteroaromatische Gruppe ist, die mindestens ein Heteroatom ausgewählt aus O oder S enthält;
L -$R'_2$Si- ist, wobei jedes R' unabhängig $C_{1-20}$-Hydrocarbyl oder $C_{1-10}$-Alkyl ist, substituiert mit einem Alkoxy, das 1 bis 10 Kohlenstoffatome aufweist;
M Ti, Zr oder Hf ist;
jedes $R_1$ gleich oder unterschiedlich ist und eine $C_{1-6}$-Alkylgruppe oder $C_{1-6}$-Alkoxygruppe ist;
jedes n 1 bis 2 ist;
jedes $R_2$ gleich oder unterschiedlich ist und eine $C_{1-6}$-Alkylgruppe, $C_{1-6}$-Alkoxygruppe oder -$Si(R)_3$-Gruppe ist;
jedes R eine $C_{1-10}$-Alkyl- oder Phenylgruppe ist, optional substituiert durch 1 bis 3 $C_{1-6}$-Alkylgruppen; und
jedes p 0 bis 1 ist.

**8.** Polyethylenmischung nach einem der vorstehenden Ansprüche, wobei das mPE einen $MFR_2$ (190 °C, 2,16 kg, ISO 1133) im Bereich von 0,05 bis 3,0 g/10 min, bevorzugt im Bereich von 0,1 bis 1,5 g/10 min und stärker bevorzugt im Bereich von 0,1 bis 1,0 g/10 min
und
eine Dichte im Bereich von 908 bis 930 kg/$m^3$, bevorzugt im Bereich von 910 bis 925 kg/$m^3$ und stärker bevorzugt im Bereich von 912 bis 920 kg/$m^3$ aufweist.

**9.** Polyethylenmischung nach einem der vorstehenden Ansprüche, wobei das mPE einen Verzweigungsindex $g'_{85-100}$ (bestimmt durch Gelpermeationschromatographie (GPC) wie im experimentellen Teil beschrieben) im Bereich von 0,60 bis 0,88, bevorzugt von 0,70 bis 0,86 und stärker bevorzugt von 0,75 bis 0,85 aufweist.

**10.** Polyethylenmischung nach einem der vorstehenden Ansprüche, wobei das mPE ein bimodales Polyethylen-Copolymer ist, bestehend aus

30,0 bis 70,0 Gew.-%, bezogen auf das mPE, einer Ethylen-1-Buten-Polymerkomponente (X), und
70,0 bis 30,0 Gew.-%, bezogen auf das mPE, einer Ethylen-1-Hexen-Polymerkomponente (Y),
wobei
die Ethylenpolymerkomponente (X) einen $MFR_2$ (190 °C, 2,16 kg, ISO 1133) im Bereich von 1,0 bis 40 g/10 min, bevorzugt von 2,0 bis 30 g/10 min, stärker bevorzugt von 3,0 bis 20 g/10 min, noch stärker bevorzugt von 4,0 bis 10 g/10 min und
eine Dichte im Bereich von 920 bis 950 kg/$m^3$, bevorzugt von 925 bis 945 kg/$m^3$, stärker bevorzugt von 930 bis

940 kg/m$^3$, aufweist und
die Ethylenpolymerkomponente (Y) einen $MFR_2$ (190 °C, 2,16 kg, ISO 1133) im Bereich von 0,01 bis 1,5 g/10 min, bevorzugt von 0,02 bis 1,0 g/10 min, stärker bevorzugt von 0,03 bis 0,8 g/10 min und noch stärker bevorzugt von 0,03 bis 0,5 g/10 min und
eine Dichte im Bereich von 885 bis 910 kg/m$^3$, bevorzugt von 890 bis 908 kg/m$^3$ und stärker bevorzugter von 892 bis 905 kg/m$^3$, aufweist.

**11.** Polyethylenmischung nach einem der vorstehenden Ansprüche, wobei die Mischung aus

a) 65,0 Gew.-% bis 98,0 Gew.-%, bevorzugt 75,0 Gew.-% bis 96,0 Gew.-% und stärker bevorzugt 80,0 Gew.-% bis 92,0 Gew.-%, bezogen auf das Gesamtgewicht der Polyethylenmischung, von dem multimodalen metallocenkatalysierten linearen Polyethylen niedriger Dichte (mLLDPE) und
b) 2,0 Gew.-% bis 35,0 Gew.-%, bevorzugt 4,0 Gew.-% bis 25,0 Gew.-% und stärker bevorzugt 8,0 Gew.-% bis 20,0 Gew.-%, bezogen auf das Gesamtgewicht der Polyethylenmischung, von dem metallocenkatalysierten Polyethylencopolymer (mPE) besteht.

**12.** Verwendung der Polyethylenmischung nach einem der vorstehenden Ansprüche zur Herstellung einer einlagigen Blasfolie.

**13.** Einlagige Blasfolie, die die Polyethylenmischung nach einem der vorstehenden Ansprüche 1 bis 11 umfasst, wobei die Folie **dadurch gekennzeichnet ist, dass** sie aufweist

a) eine Dart-Drop-Schlagfestigkeit (DDI), bestimmt gemäß ASTM D1709, Methode **A,** an einer 40 μm eilagigen Testblasfolie von mindestens 750 g bis zu 1500 g, bevorzugt 800 g bis zu 1400 g und stärker bevorzugt 850 g bis zu 1200 g, und
b) eine Trübung (gemessen an einer 40 μm einlagigen Testblasfolie gemäß ASTM D 1003-00) von unter 10 %, bevorzugt zwischen 2 % und 9 %, stärker bevorzugt zwischen 4 % und 8 %, und
c) eine Klarheit (gemessen an einer 40 μm einlagigen Testblasfolie gemäß ASTM D 1003-00) von über 98,0 %, bevorzugt von mindestens 98,5 %, stärker bevorzugt mindestens 99.0 %.

**14.** Verwendung der Folie nach Anspruch 13 als Verpackungsmaterial, insbesondere als ein Verpackungsmaterial für Lebensmittel.

**15.** Verwendung der Folie nach Anspruch 13 als eine Schicht in mehrlagigen Polyethylen-basierten Blasfolien, bevorzugt als Kernschicht in mehrlagigen Polyethylen-basierten Blasfolien.

## Revendications

**1.** Mélange de polyéthylène comprenant

a) de 51,0% en poids à 99,0% en poids, sur la base du poids total du mélange de polyéthylène, d'un polyéthylène basse densité linéaire catalysé par un métallocène multimodal (mLLDPE) qui est constitué

(i) de 30,0 à 70,0% en poids d'un composant polymère d'éthylène-1-butène (A), et
(ii) de 70,0 à 30,0% en poids d'un composant polymère d'éthylène-1-hexène (B),
le composant polymère d'éthylène-1-butène (A) ayant
une densité dans la plage allant de 920 à 950 kg/m$^3$,
un $MFR_2$ (190°C, 2,16 kg, ISO 1133) dans la plage allant de 2,0 à 400,0 g/10 min, et
le composant polymère d'éthylène (B) ayant
une densité dans la plage allant de 885 à 918 kg/m$^3$,
un $MFR_2$ (190°C, 2,16 kg, ISO 1133) dans la plage allant de 0,01 à 1,5 g/10 min,
le polyéthylène basse densité linéaire catalysé par un métallocène multimodal (mLLDPE) ayant une densité dans la plage allant de 905 à 940 kg/m$^3$,
un $MFR_2$ (190°C, 2,16 kg, ISO 1133) dans la plage allant de 0,3 à 5,0 g/10 min, et
un rapport entre le $MFR_{21}$ (190°C, 21,6 kg, ISO 1133) et le $MFR_2$ (190°C, 2,16 kg, ISO 1133), $MFR_{21}/MFR_2$, dans la plage allant de 20 à 70 ;
un indice de ramification $g'_{85-100}$ (déterminé par chromatographie par perméation sur gel (GPC) tel que décrit

dans la partie expérimentale) de < 1,00 et

b) de 1,0 à 49,0% en poids, sur la base du poids total du mélange de polyéthylène, d'un copolymère de polyéthylène ramifié catalysé par un métallocène (mPE), ledit mPE ayant une densité dans la plage allant de 905 à 940 kg/$m^3$ ;
un $MFR_2$ (190°C, 2,16 kg, ISO 1133) dans la plage allant de 0,01 à 5,0 g/10 min, et
un indice de ramification $g'_{85-100}$ (déterminé par chromatographie par perméation sur gel (GPC) tel que décrit dans la partie expérimentale) dans la plage allant de 0,50 à < 0,90,
le rapport entre le $MFR_2$ du mPE et le $MFR_2$ du mLLDPE étant < 1,0 et
l'indice de ramification $g'_{85-100}$ du mPE étant inférieur à l'indice de ramification $g'_{85-100}$ du mLLDPE.

2. Mélange de polyéthylène selon la revendication 1, dans lequel, dans le polyéthylène basse densité linéaire catalysé par un métallocène multimodal (mLLDPE), le composant polymère d'éthylène-1-butène (A) est constitué d'une fraction polymère d'éthylène (A-1) et d'une fraction polymère d'éthylène (A-2),

où la fraction polymère d'éthylène (A-1) a
une densité dans la plage allant de 920 à 950 kg/$m^3$, de préférence de 922 à 945 kg/$m^3$, plus préférablement de 925 à 940 kg/$m^3$, tel que de 928 à 935 kg/$m^3$ ; et
un $MFR_2$ (190°C, 2,16 kg, ISO 1133) dans la plage allant de 1,0 à 800,0 g/10 min, de préférence de 1,5 à 400,0 g/10 min, plus préférablement de 2,0 à 200,0 g/10 min et encore plus préférablement de 2,5 à 50,0 g/10 min, et
la fraction polymère d'éthylène (A-2) a
une densité dans la plage allant de 920 à 950 kg/$m^3$, de préférence de 925 à 945 kg/$m^3$, et
un $MFR_2$ (190°C, 2,16 kg, ISO 1133) dans la plage allant de 1,5 à 400,0 g/10 min, de préférence de 2,0 à 200,0 g/10 min, plus préférablement de 2,5 à 40,0 g/10 min et tout préférablement de 3,0 à 10,0 g/10 min.

3. Mélange de polyéthylène selon la revendication 1 ou 2, dans lequel, dans le polyéthylène basse densité linéaire catalysé par un métallocène multimodal (mLLDPE)

- le composant polymère d'éthylène (A) a un $MFR_2$ (190°C, 2,16 kg, ISO 1133) allant de 2,5 à 300 g/10 min, de préférence de 3,0 à 200 g/10 min et plus préférablement de 3,2 à 100 g/10 min, encore plus préférablement de 3,5 à 20 g/10 min et
- le composant polymère d'éthylène (B) a un $MFR_2$ (190°C, 2,16 kg, ISO 1133) allant de 0,05 à 1,5 g/10 min, de préférence de 0,1 à 1,2 g/10 min et plus préférablement de 0,2 à 1,0 g/10 min.

4. Mélange de polyéthylène selon l'une quelconque des revendications précédentes, dans lequel, dans le polyéthylène basse densité linéaire catalysé par un métallocène multimodal (mLLDPE), le rapport entre le $MFR_{21}$ (190°C, 21,6 kg, ISO 1133) et le $MFR_2$ (190°C, 2,16 kg, ISO 1133), $MFR_{21}/MFR_2$, se trouve dans la plage allant de 22 à 50 et de préférence de 24 à 35.

5. Mélange de polyéthylène selon l'une quelconque des revendications précédentes, dans lequel le polyéthylène basse densité linéaire catalysé par un métallocène multimodal (mLLDPE) a un indice de ramification $g'_{85-100}$ (déterminé par chromatographie par perméation sur gel (GPC) tel que décrit dans la partie expérimentale) dans la plage allant de 0,80 à 0,98, de préférence de 0,85 à 0,96.

6. Mélange de polyéthylène selon l'une quelconque des revendications précédentes, dans lequel, dans le polyéthylène basse densité linéaire catalysé par un métallocène multimodal (mLLDPE), la quantité totale de 1-butène, sur la base du polyéthylène basse densité linéaire catalysé par un métallocène multimodal (mLLDPE), se trouve dans la plage allant de 0,1 à 3,0% en poids, de préférence de 0,5 à 2,5% en poids et plus préférablement de 0,8 à 2,0% en poids, et la quantité totale de 1-hexène, sur la base du polyéthylène basse densité linéaire catalysé par un métallocène multimodal (mLLDPE), se trouve dans la plage allant de 2,0 à 20,0% en poids, de préférence de 4,0 à 18,0% en poids et plus préférablement de 6,0 à 15,0% en poids, et

la quantité totale de 1-butène, présente dans le composant polymère d'éthylène-1-butène (A) se trouve dans la plage allant de 0,5 à 8,0% en poids, de préférence de 0,8 à 6,0% en poids, plus préférablement de 1,0 à 5,0% en poids, encore plus préférablement de 1,5 à 4,5% en poids, sur la base du composant polymère d'éthylène-1-butène (A) et
la quantité totale (en % en poids) de 1-hexène, présente dans le composant polymère d'éthylène-1-hexène (B), se trouve dans la plage allant de 8,0 à 25,0% en poids, de préférence de 9,0 à 20,0% en poids, plus

préférablement de 10,0 à 18,0% en poids, sur la base du composant polymère d'éthylène-1-hexène (B).

7. Mélange de polyéthylène selon l'une quelconque des revendications précédentes, dans lequel le polyéthylène basse densité linéaire catalysé par un métallocène multimodal (mLLDPE) est produit en présence d'un complexe métallocène de formule (I) :

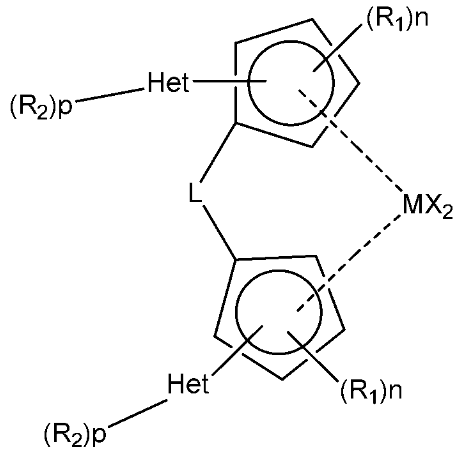

dans laquelle chaque X est indépendamment un atome d'halogène, un groupement $C_{1-6}$-alkyle, un groupement $C_{1-6}$-alcoxy, un groupement phényle ou benzyle ;
chaque Het est indépendamment un groupement hétéroaromatique monocyclique contenant au moins un hétéroatome choisi parmi O ou S ;
L est -$R'_2$Si-, où chaque R' est indépendamment $C_{1-20}$-hydrocarbyle ou $C_{1-10}$-alkyle substitué par alcoxy ayant de 1 à 10 atomes de carbone ;
M est Ti, Zr ou Hf ;
chaque $R_1$ est identique ou différent et est un groupement $C_{1-6}$-alkyle ou un groupement $C_{1-6}$-alcoxy ;
chaque n va de 1 à 2 ;
chaque $R_2$ est identique ou différent et est un groupement $C_{1-6}$-alkyle, un groupement $C_{1-6}$-alcoxy ou un groupement -Si(R)$_3$ ; chaque R est $C_{1-10}$-alkyle ou un groupement phényle éventuellement substitué par de 1 à 3 groupements $C_{1-6}$-alkyle ;
et chaque p va de 0 à 1.

8. Mélange de polyéthylène selon l'une quelconque des revendications précédentes, dans lequel le mPE a un $MFR_2$ (190°C, 2,16 kg, ISO 1133) dans la plage allant de 0,05 à 3,0 g/10 min, de préférence dans la plage allant de 0,1 à 1,5 g/10 min, et plus préférablement dans la plage allant de 0,1 à 1,0 g/10 min
et
une densité dans la plage allant de 908 à 930 kg/m$^3$, de préférence dans la plage allant de 910 à 925 kg/m$^3$ et plus préférablement dans la plage allant de 912 à 920 kg/m$^3$.

9. Mélange de polyéthylène selon l'une quelconque des revendications précédentes, dans lequel le mPE a un indice de ramification $g'_{85-100}$ (déterminé par chromatographie par perméation sur gel (GPC) tel que décrit dans la partie expérimentale) dans la plage allant de 0,60 à 0,88, de préférence de 0,70 à 0,86 et plus préférablement de 0,75 à 0,85.

10. Mélange de polyéthylène selon l'une quelconque des revendications précédentes, dans lequel le mPE est un copolymère de polyéthylène bimodal constitué

de 30,0 à 70,0% en poids, sur la base du mPE, d'un composant polymère d'éthylène-1-butène (X), et
de 70,0 à 30,0% en poids, sur la base du mPE, d'un composant polymère d'éthylène-1-hexène (Y), où
le composant polymère d'éthylène (X) a un $MFR_2$ (190°C, 2,16 kg, ISO 1133) dans la plage allant de 1,0 à 40 g/10 min, de préférence de 2,0 à 30 g/10 min, plus préférablement de 3,0 à 20 g/10 min, encore plus préférablement de 4,0 à 10 g/10 min et
une densité dans la plage allant de 920 à 950 kg/m$^3$, de préférence de 925 à 945 kg/m$^3$, plus préférablement de 930 à 940 kg/m$^3$ et
le composant polymère d'éthylène (Y) a un $MFR_2$ (190°C, 2,16 kg, ISO 1133) dans la plage allant de 0,01 à 1,5

g/10 min, de préférence de 0,02 à 1,0 g/10 min, plus préférablement de 0,03 à 0,8 g/10 min, et encore plus préférablement de 0,03 à 0,5 g/10 min et
une densité dans la plage allant de 885 à 910 kg/$m^3$, de préférence de 890 à 908 kg/$m^3$ et plus préférablement de 892 à 905 kg/$m^3$.

**11.** Mélange de polyéthylène selon l'une quelconque des revendications précédentes, dans lequel le mélange est constitué

a) de 65,0% en poids à 98,0% en poids, de préférence de 75,0% en poids à 96,0% en poids et plus préférablement de 80,0% en poids à 92,0% en poids, sur la base du poids total du mélange de polyéthylène, du polyéthylène basse densité linéaire catalysé par un métallocène multimodal (mLLDPE) et
b) de 2,0% en poids à 35,0% en poids, de préférence de 4,0% en poids à 25,0% en poids et plus préférablement de 8,0% à 20,0% en poids, sur la base du poids total du mélange de polyéthylène, du copolymère de polyéthylène catalysé par un métallocène (mPE).

**12.** Utilisation du mélange de polyéthylène selon l'une quelconque des revendications précédentes, pour la préparation d'un film soufflé monocouche.

**13.** Film soufflé monocouche, comprenant le mélange de polyéthylène selon l'une quelconque des revendications 1 à 11 précédentes, le film étant **caractérisé en ce qu'**il présente

a) une résistance aux chocs par chute de fléchette (DDI) déterminée selon ASTM D1709, méthode A, sur un film soufflé monocouche d'essai de 40 μm, d'au moins 750 g jusqu'à 1500 g, de préférence de 800 g jusqu'à 1400 g et plus préférablement de 850 g jusqu'à 1200 g, et
b) un voile (mesuré sur un film soufflé monocouche d'essai de 40 μm selon ASTM D 1003-00) inférieur à 10%, de préférence entre 2% et 9%, plus préférablement entre 4% et 8%, et
c) une clarté (mesurée sur un film soufflé monocouche d'essai de 40 μm selon ASTM D 1003-00) supérieure à 98,0%, de préférence d'au moins 98,5%, plus préférablement d'au moins 99,0%.

**14.** Utilisation du film selon la revendication 13 comme matériau d'emballage, en particulier comme matériau d'emballage pour les aliments.

**15.** Utilisation du film selon la revendication 13 comme couche dans des films soufflés multicouches à base de polyéthylène, de préférence comme couche centrale dans des films soufflés multicouches à base de polyéthylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022018239 A1
- EP 3298067 A1
- WO 2021191019 A1
- US 2020056004 A1
- WO 2016198273 A
- WO 2021009189 A
- WO 2021009190 A
- WO 2021009191 A
- WO 2021009192 A
- WO 2018108918 A


### Non-patent literature cited in the description


- **KLIMKE, K** ; **PARKINSON, M.** ; **PIEL, C.** ; **KAMINSKY, W** ; **SPIESS, H.W** ; **WILHELM, M.** *Macromol. Chem. Phys.*, 2006, vol. 207, 382
- **PARKINSON, M.** ; **KLIMKE, K** ; **SPIESS, H.W.** ; **WILHELM, M**. *Macromol. Chem. Phys.*, 2007, vol. 208, 2128
- **POLLARD, M** ; **KLIMKE, K** ; **GRAF, R** ; **SPIESS, H.W.** ; **WILHELM, M.** ; **SPERBER, O** ; **PIEL, C** ; **KAMINSKY, W.** *Macromolecules*, 2004, vol. 37, 813
- **FILIP, X** ; **TRIPON, C** ; **FILIP, C**. *J. Mag. Resn.*, 2005, vol. 176, 239
- **GRIFFIN, J.M** ; **TRIPON, C** ; **SAMOSON, A** ; **FILIP, C.** ; **BROWN, S.P**. *Mag. Res. in Chem.*, 2007, vol. 45 (S1), S198
- **CASTIGNOLLES, P** ; **GRAF, R** ; **PARKINSON, M** ; **WILHELM, M.** ; **GABORIEAU, M**. *Polymer*, 2009, vol. 50, 2373
- **BUSICO, V** ; **CIPULLO, R**. *Prog. Polym. Sci.*, 2001, vol. 26, 443
- **BUSICO, V.** ; **CIPULLO, R** ; **MONACO, G** ; **VACATELLO, M** ; **SEGRE, A.L.** *Macromoleucles*, 1997, vol. 30, 6251
- **ZHOU, Z** ; **KUEMMERLE, R.** ; **QIU, X.** ; **REDWINE, D** ; **CONG, R** ; **TAHA, A** ; **BAUGH, D** ; **WINNIFORD, B**. *J. Mag. Reson.*, 2007, vol. 187, 225
- **BUSICO, V** ; **CARBONNIERE, P** ; **CIPULLO, R** ; **PELLECCHIA, R** ; **SEVERN, J.** ; **TALARICO, G**. *Macromol. Rapid Commun.*, 2007, vol. 28, 1128
- **RESCONI, L** ; **CAVALLO, L.** ; **FAIT, A.** ; **PIEMONTESI, F.** *Chem. Rev.*, 2000, vol. 100, 1253